# EUROPEAN PATENT SPECIFICATION

(11) **EP 4 061 519 B1**
(45) Date of publication and mention of the grant of the patent: **27.08.2025**
(21) Application number: 20807777.6
(22) Date of filing: 20.11.2020
(51) Int. Cl.: B01D 69/14, A61M 1/16, A61M 1/34, B01D 71/68

(54) **POROUS MEMBRANES COMPRISING SORBENT PARTICLES FOR IMPROVED UREA CAPTURE**
PORÖSE MEMBRANEN MIT SORPTIONSPARTIKELN FÜR VERBESSERTE HARNSTOFFAUFNAHME
MEMBRANES POREUSES COMPRENANT DES PARTICULES DE SORBANT POUR AMÉLIORER LA CAPTURE D'URÉE

(30) Priority: 22.11.2019 EP 19211034
(43) Date of publication of application: 28.09.2022
(73) Proprietor: UMC Utrecht Holding B.V., 3584 CS Utrecht (NL); Universiteit Utrecht Holding B.V., 3584 CS Utrecht (NL); UNIVERSITEIT TWENTE, 7522 NB Enschede (NL)
(72) Inventor: STAMATIALIS, Dimitrios, 7424 BB Deventer (NL); GEREMIA, Ilaria, 30025 Teglio Veneto (VE) (IT); VAN NOSTRUM, Cornelus Franciscus, 3584 CM Utrecht (NL); GERRITSEN, Karin Gerarda Frederika, 3584 CM Utrecht (NL); SMAKMAN, Robert, 1393 NW Nigtevecht (NL); HENNINK, Wilhelmus Everhardus, 3584 CM Utrecht (NL); JONG, Jacobus Adrianus Wilhelmus, 3584 CM Utrecht (NL); GUO, Yong, Hangzhou, Zhejiang 311121 (CN)
(74) Representative: Nederlandsch Octrooibureau
(86) International application number: PCT/EP2020/082897
(87) International publication number: WO 2021/099578

(56) References cited:
- WO-A1-2004/078797
- MARLON S.L. TIJINK ET AL: "Mixed matrix hollow fiber membranes for removal of protein-bound toxins from human plasma", BIOMATERIALS, vol. 34, no. 32, 1 October 2013 (2013-10-01), pages 7819 - 7828, XP055118049, ISSN: 0142-9612, DOI: 10.1016/j.biomaterials.2013.07.008
- LIMIN LU ET AL: "Influence of zeolite shape and particle size on their capacity to adsorb uremic toxin as powders and as fillers in membranes : Influence of Zeolite Shape and Particle Size", JOURNAL OF BIOMEDICAL MATERIALS RESEARCH. PART B: APPLIED BIOMATERIALS, vol. 105, no. 6, 29 April 2016 (2016-04-29), US, pages 1594 - 1601, XP055689742, ISSN: 1552-4973, DOI: 10.1002/jbm.b.33698
- NOEL JACOB KALEEKKAL ET AL: "Graphene Oxide Nanocomposite Incorporated Poly(ether imide) Mixed Matrix Membranes for in Vitro Evaluation of Its Efficacy in Blood Purification Applications", INDUSTRIAL & ENGINEERING CHEMISTRY RESEARCH, vol. 54, no. 32, 11 August 2015 (2015-08-11), pages 7899 - 7913, XP055689752, ISSN: 0888-5885, DOI: 10.1021/acs.iecr.5b01655
- KOKI NAMEKAWA ET AL: "Fabrication of zeolite-polymer composite nanofibers for removal of uremic toxins from kidney failure patients", BIOMATERIALS SCIENCE, vol. 2, no. 5, 1 January 2014 (2014-01-01), GB, pages 674, XP055689750, ISSN: 2047-4830, DOI: 10.1039/c3bm60263j
- LIMIN LU ET AL: "Creatinine adsorption capacity of electrospun polyacrylonitrile (PAN)-zeolite nanofiber membranes for potential artificial kidney applications", JOURNAL OF APPLIED POLYMER SCIENCE, vol. 132, no. 34, 10 September 2015 (2015-09-10), US, pages n/a - n/a, XP055689756, ISSN: 0021-8995, DOI: 10.1002/app.42418

## Description

### Field of the invention

The present invention relates to a method for preparing a membrane comprising sorbent particles that bind urea. The invention also relates to the sorbent-comprising membranes per se, and to methods of using the membranes. The membranes are useful for undergoing subsequent reactions with small molecules such as urea, for instance to remove urea from a solution.

### Background art

Patients with end stage kidney disease (ESKD) or severe acute kidney failure undergo dialysis (either hemodialysis, or HD, or peritoneal dialysis, or PD) to replace kidney function. Although lifesaving, conventional dialysis has major shortcomings. The treatment is time-consuming and removal of waste molecules and excess water is inadequate, contributing significantly to poor life quality, severe health problems and high mortality (15-20% per year). Treatment costs are very high.

In dialysis, patient fluids are generally dialysed against a dialysis fluid, which is then discarded. It is desirable to regenerate the dialysis fluid, to allow use of smaller volumes. In miniaturisation efforts, patient fluids are dialysed against a relatively small amount of dialysis fluid, referred to as dialysate. During this process waste solutes from the patient fluid move towards the dialysate by diffusion and/or convection, often through a membrane such as a semipermeable membrane. If waste solutes are later removed from a dialysate, it can be reused, which is referred to as regeneration of dialysate. Efficient regeneration of dialysate would reduce the need for large volumes of dialysis fluid, making dialysis more practically implemented, less resource-dependent, and reducing waste streams.

A miniature artificial kidney device will be a major breakthrough in renal replacement therapy. Worldwide the number of dialysis patients has been estimated at 3.4 million (see www.fresenius.com/media_library/Fresenius_Annual_Report_2018.pdf). Currently, approximately 89% of the dialysis patients use HD techniques, either in a center (>96%) or at home (<4%) (see the ERA-EDTA Registry Annual Report 2017). While in-center HD requires long frequent visits to the hospital (about 3 times per week, 4h per session), home HD offers more flexibility and autonomy. However, home HD still requires bulky dialysis machines and a large supply of dialysis fluids (at least 20 L per treatment) or a bulky immobile water purification system. A user-friendly lightweight HD device that is independent of a fixed water supply or large supply of dialysis fluids will increase patients' mobility allowing them to stay active in social life and travel freely.

The large fluctuations in water balance and uremic toxin levels between dialysis treatments with standard thrice weekly HD could be attenuated with continuous or more frequent HD, which may improve patient outcome (Nesrallah GE et al., J Am Soc Nephrol 2012;23:696-705; Susantitaphong P et al., Am J Kidney Dis 2012;59:689-99; Ting GO, et al. Am J Kidney Dis 2003;42:1020-35). A more liberal diet would be allowed. Significant cost reductions will be achieved through reduced need of dialysis personnel and related infrastructure, fewer medications and less hospitalizations due to reduced comorbidity.

PD is currently used by approximately 11% of the dialysis patients (see Fresenius 2018 annual report). Although PD, in contrast to HD, offers the opportunity to dialyze continuously, the technique has some major drawbacks: uremic toxin clearance is low (Evenepoel P et al., Kidney Int 2006;70:794-9), exchange procedures are time-consuming and technique failure rate is high (median technique survival is 3.7 years) due to high incidence of infection of the peritoneal membrane (peritonitis) and membrane failure (Perl J et al., Clin J Am Soc Nephrol 2012;7:1145-54). The low dialysis efficacy is largely due to fast dissipation of the concentration gradient between plasma and peritoneal dialysate during a dwell, thereby limiting solute transport (Gotch FA. Kinetic modeling of continuous flow peritoneal dialysis. Semin Dial 2001;14:378-83). A miniature PD device that continuously regenerates the dialysate, thereby maintaining the plasma-dialysate concentration gradient, would greatly enhance PD efficacy. This will allow reduction in the number of time consuming exchanges while still improving waste solute clearance. In addition, reducing the number of connections decreases the risk of contamination and will lower peritonitis rates (De Fijter CW, et al. Adv Perit Dial 1991;7:186-9; Piraino B, Sheth H. Blood Purif 2010;29:145-9.). Continuous glucose infusion by the miniature PD device will reduce functional deterioration of the peritoneal membrane by avoiding very high toxic glucose concentrations as applied in conventional PD (Gotch 2001). By preventing the two major causes of technique failure in conventional PD (recurrent infection and functional loss of the peritoneal membrane) the miniature artificial kidney will significantly prolong technique survival.

A user-friendly wearable or portable dialysis device, providing dialysis outside the hospital, would thus represent a huge leap forward for dialysis patients and would significantly increase their quality of life. The device would allow continuous or more frequent dialysis which will improve removal of waste solutes and excess fluid, and hence patient health. A miniaturized design, independent of a fixed water supply, offers freedom and autonomy to the patient.

In recent years, small prototype dialysis devices have been constructed that adequately remove some organic waste solutes and waste ions. However, thus far no adequate strategy for removal of urea exists that allows miniaturization to truly wearable proportions, which is one of the main obstacles for successful realization of a miniature artificial kidney device. Urea is the waste solute with the highest daily production (primary waste product of nitrogen metabolism) and exerts toxic effects at high plasma concentrations. However, urea is difficult to bind and has low reactivity.

Sorbents that are particularly suitable as urea sorbents have been known for a long time. DE2305186A1 / US3933753A discloses a macromolecular composition with a polystyrene-like scaffold featuring glyoxal moieties. This composition captured up to 1 mmol/g urea. It was further developed as described in US4012317, and WO2004078797A1 discloses similar ketoaldehyde materials, reaching a urea binding capacity of 1.5 mmol/g.

EP121275A1 / US4897200A discloses a ninhydrin-type sorbent. A urea binding capacity of 1.2 mmol/g dry sorbent in 8 hours was shown at clinically relevant urea concentrations. However, for effective miniaturisation, a higher urea binding capacity is required. WO2019110557 discloses a ninhydrin-based sorbent that has a urea-binding capacity of over 2 mmol/g.

US4178241A discloses a polystyrene-based sorbent with para-thio, para-nitro, or para-amino moieties. For thio moieties, the binding of urea was again shown to be at about 1.5 mmol/g. Also, creatinine was shown to be bound at well over 90% of normal adult daily production for each functional group.

Membranes are well known for filtration, and membranes for urea removal have also been proposed. WO2017116515A1 discloses the use of electrically charged membranes to improve urea separation from a dialysis fluid, and suggests the use of electrooxidation of separated urea. A disadvantage of this method is that reactive oxygen species are generated as a byproduct.

Membranes have also found use in removal of other waste solutes from fluids. Geremia et al. (DOI: 10.1016/j.actbio.2019.04.009) describe membranes comprising activated carbon particles. These membranes can bind uremic toxins, but activated carbon is a poor urea binder and indeed no binding of urea is shown. This poor binding is confirmed by Cheah et al (Materials Chemistry and Physics, 175 (2016), 151-157)*,* who describe silica-based materials with amines or hydroxyl groups for noncovalent capturing of urea as an alternative. Marlon S.L. Tijink et al. describe mixed matrix hollow fiber membranes for removal of protein-bound toxins from human plasma,(BIOMATERIALS, vol. 34, no. 32, 1 October 2013 (2013-10-01), pages 7819-7828).

WO2014007716 describes a macroporous copper-chitosan polymer membrane for adsorption of urea from a dialysis solution. This membrane binds urea but only at a low capacity. In addition, the removal is via a readily reversible binding, as the membrane is only capable of having non-covalent interactions with urea via the copper, which is itself non-covalently bound as well.

WO2011102807A1 discloses epoxide-covered substrates. The epoxides can be used to recover solutes from a solution. They are also used to immobilise urease enzymes, which help dispose of urea. A disadvantage of urease enzymes is their sensitivity to environmental factors, their costly and laborious production, and the fact that toxic ammonium is generated by their reaction, which in turn requires removal using cation exchangers that add extra weight to the device in which they are used, and that comprise materials such as zirconium phosphate that may also undesirably bind calcium or potassium. WO2016126596 uses a very different substrate, viz. reduced graphene oxide. While a high urea binding capacity was shown, the captured urea represented less than 15% of the initial urea concentration.

To enable the development of improved artificial kidney devices, there is an ongoing need for easily prepared materials that bind higher amounts of urea, without the risk of leaching components or captured urea back into a dialysate, and without generating harmful side products, and that bind urea faster having improved kinetics, and that combine advantages of a membrane with that of a dedicated urea sorbent, reducing the total weight required for a device.

### Summary of the invention

The invention is based on the surprising finding that the performance of urea sorbents is increased when the sorbent particles are embedded in a porous membrane matrix. Binding capacity of the urea sorbent increased, and kinetics of binding also improved. The invention thus relates to a membrane comprising embedded particulate material, wherein the membrane is a porous polymeric membrane, wherein the particulate material comprises a urea sorbent, and wherein the particle size of the particulate material is at most 250 µm along the largest diameter. Preferably the particulate material is present in the membrane in a range of from 5 wt% to 80 wt%, more preferably of from 25 wt% to 70 wt%, based on the total dry weight of the membrane and the particulate material. Preferably the particle size of the particulate material is at most 150 µm along the largest diameter, more preferably at most 85 µm. Preferably the membrane is in the form of a hollow fibre, a full fibre, or a flat sheet; more preferably the membrane is a hollow fibre. Preferably the membrane comprises at least one polymer selected from polysulfone, polyethersulfone, polyphenylenesulfone, polyarylethersulfone, polyamide, polyetherimide, polyimide, polyethylene-co-vinyl alcohol, polyethylene-co-vinyl acetate, cellulose acetate, cellulose triacetate, polyvinylidene fluoride, polyvinylchloride, polyacrylonitrile, polyurethane, polyether ether ketone, and/or polyacrylic acid; more preferably it comprises polyethersulfone and/or polyvinylpyrrolidone. Preferably the membrane has a water permeability of at least 1 L/(m²·h·Bar). Preferably the urea sorbent is a sorbent that covalently captures urea. Preferably the urea sorbent is a macromolecular composition comprising a polymeric backbone grafted with moieties that can covalently capture urea, wherein the moieties that can covalently capture urea preferably comprise two or more neighboring carbonyl groups or a hydrate thereof. Preferably, the urea sorbent is selected from a ninhydrin-type sorbent, a phenylglyoxaldehyde-type sorbent, and/or a triformylmethyl-type sorbent. In preferred embodiments the particulate material further comprises activated carbon particles, ion exchange particles such as ion exchange resin particles or ion exchange silica particles, silica particles such as unmodified silica particles or alkylated silica particles, zeolite particles, ceramic particles, polymeric particles such as porous polymeric particles or non-porous polymeric particles, and/or molecularly imprinted particles, and/or the membrane further comprises an additive such as a hydrophilic additive, preferably polyvinylpyrrolidone, chitosan, polyethylene glycol, dextran, glycerol, diethylene glycol, octanol, oxalic acid, maleic acid, tartaric acid, fumaric acid, lithium chloride, and/or calcium chloride.

Also provided is the membrane as defined above for use as a medicament, preferably for use in the treatment of a disease or condition associated with accumulation of urea.

Also provided is a method for the preparation of a membrane as defined above, comprising the steps of i. providing urea sorbent particles having a size of at most 250 µm along the largest diameter; ii. mixing the urea sorbent particles with polymeric material in a solvent for the polymeric material to obtain a mixture; iii. extruding or casting the mixture to form a membrane; and iv. optionally solidifying said membrane, preferably by phase inversion.

Also provided is a method for removing nucleophilic waste solutes from a fluid, comprising the steps of: i) providing a fluid comprising nucleophilic waste solutes, and iia) contacting said fluid with a membrane as defined in any one of claims 1-10, or alternately iib) contacting said fluid with a dialysis fluid through a membrane, wherein the dialysis fluid is in contact with a membrane as defined in any one of claims 1-10, and iii) optionally, recovering the fluid.

The invention further provides a cartridge for use in a dialysis device, comprising a membrane as defined above. The invention also provides a dialysis device comprising a membrane as defined above, or a cartridge as defined above.

### Description of embodiments

The present invention seeks to provide an improved sorbent material with an increased capacity and binding rate for nucleophilic waste solutes, of which urea is an important example. A sorbent is a material that binds target substances - in this case the sorbent binds nucleophiles such as urea. The inventors invented a membrane with high urea binding capacity and fast binding kinetics, rendering the membrane suitable for application in dialysis. The membrane comprises sorbent particles. The improved sorbent-membrane, which can be referred to as a mixed matrix membrane (MMM) because it comprises particulate material embedded in a polymeric matrix, allows for the miniaturization of sorbent cartridges and is thus an important step towards a miniature artificial kidney device.

The invention is based on the surprising finding that the performance of urea sorbents is increased when the sorbent particles are embedded in a porous membrane matrix. Not only did binding capacity of the urea sorbent increase, the kinetics of binding also improved. Accordingly, the invention provides a membrane comprising embedded particulate material,
wherein the membrane is a porous polymeric membrane,
wherein the particulate material comprises a urea sorbent, and
wherein the particle size of the particulate material is at most 250 µm along the largest diameter.

Such a membrane with embedded urea sorbent particles is referred to hereinafter as a membrane according to the invention. In general, the membrane of the invention achieves faster kinetics for the removal of nucleophilic waste solutes, in particular urea, as compared to other systems such as free sorbent particles. Furthermore, the membrane of the invention has a higher capacity to remove nucleophilic waste solutes, in particular urea, as compared to other systems. Surprisingly, the amount of urea adsorbed by the membrane is higher than when the sorbent particles are not embedded in the membrane but dispersed in an aqueous urea solution.

The membrane according to the invention comprises embedded particulate material. A skilled person is familiar with membranes having embedded particulate material, for example from WO2019175366 or WO2014007716 or Geremia et al. (DOI: 10.1016/j.actbio.2019.04.009). In general, embedded particulate material refers to particles that are trapped by the polymeric matrix which constitutes the membrane. Embedded particulate material can be wholly surrounded by membrane matrix, or it can be partially exposed at a surface of the polymer.

### Membrane

The membrane can advantageously be used in (hemo)dialysis for the removal of urea, wherein blood is led past the membrane, or past a semipermeable membrane that separates it from a small amount of dialysis fluid, after which the dialysis fluid is contacted with the membrane of the invention. The sorbent particles in the membrane then bind nucleophilic waste solutes such as urea, so that diffusion of these solutes over the (semipermeable) membrane is continued and does not slow down due to saturation.

Membrane technology is well developed, and a skilled person can select a suitable type of membrane in which the urea sorbent is to be embedded, or in other words can select a suitable polymer matrix in which the urea sorbent is to be embedded to develop the MMM (see "Basic Principles of Membrane Technology", Second edition by M. Mulder, Kluwer Academic publishers, ISBN 0-7923-4247-x; and "Biomedical membranes and bioartificial organs", D. Stamatialis, Ed., World Scientific/ Oxford press, ISBN 978-981-3221-75-8 (2018). Suitable membranes are made of polymers, thus the membranes comprise or consist of a polymeric matrix. The membranes are porous, which can be macroporous, microporous, or nanoporous. Dense (nonporous) membranes are not suitable because in such membranes the particulate material would not be sufficiently accessible to fluids. Based on the application and the relative importance of permeability therein, one can define microfiltration, ultrafiltration, nanofiltration, and reverse osmosis membranes, which have decreasing pore sizes. The transmembrane pressure required increases as pore size decreases.

For applications wherein urea removal is the prime goal, microfiltration and/or ultrafiltration are preferred. In general, a lower permeability can help improve the kinetics of urea binding, because residency of passing molecules is increased, providing more time for solutes to bind to embedded sorbent particles.

Membranes according to the invention are particularly suited for applications in liquid filtration, and therefore preferred membranes are filtration membranes, more preferably liquid filtration membranes, which are porous membranes. Filtration membranes can be microfiltration membranes, ultrafiltration membranes, nanofiltration membranes, and reverse osmosis membranes. In preferred embodiments, the membrane is a microfiltration, ultrafiltration, or nanofiltration membrane. In preferred embodiments, the membrane is a microfiltration or an ultrafiltration membrane. In preferred embodiments, the membrane is a nanofiltration or reverse osmosis membrane. In some preferred embodiments, for example when for use in water treatment, the membrane is a reverse osmosis membrane.

Microfiltration membranes are known in the art. They typically have a water permeability of about 500 to 5000 L/(m² h Bar), and they are typically operated at pressures in the range of 0 to 1 bar. Examples of microfiltration membranes are organic membranes made using polymers including cellulose acetate (CA), polysulfone, polyvinylidene fluoride, polyethersulfone, and/or polyamide. Inorganic membranes are less preferred as they are less readily prepared using a method of the invention.

Ultrafiltration membranes are also known and have pore sizes ranging from 0.1 µm to 0.01 µm. They are able to retain proteins, endotoxins, viruses and silica. Ultrafiltration has diverse applications which span from waste water treatment to pharmaceutical applications and dialysis therapy. They typically have a water permeability of about 50 to 800 L/(m² h Bar), and they are typically operated at pressures in the range of 0.2 to 10 bar. Examples of ultrafiltration membranes are organic membranes made using polymers including polysulfone, polyethersulfone, polypropylene, cellulose acetate, and/or polylactic acid.

Nanofiltration membranes are also known and have pores sized from 0.001 µm to 0.01 µm. They can filter multivalent ions, synthetic dyes, sugars and specific salts. The typically have a water permeability of about 1 to 15 L/(m² h Bar), and they are typically operated at pressures in the range of 5 to 20 bar. Examples of nanofiltration membranes are organic membranes made using polymers including ethylene vinyl alcohol, polysulfone, polyethersulfone, polyvinylidene fluoride, polyamide, and/or polyethylene terephthalate.

Reverse Osmosis is the finest separation membrane process available, with pore sizes ranging from 0.0001 µm to 0.001 µm. Reverse osmosis is able to retain almost all molecules except for water and small hydrophilic molecules such as urea. Due to the size of the pores, the required osmotic pressure is significantly greater than that for other filtration techniques. The typically have a permeability of about 1 to 5 L/(m² h Bar), and they are typically operated at pressures in the range of 8 to 100 bar. Examples of reverse osmosis membranes are organic membranes made using cellulose triacetate (CTA).

In preferred embodiments is provided the membrane according to the invention, wherein the membrane has a water permeability of at least 1 L/(m²·h·Bar). In other preferred embodiments the water permeability is at least 50, more preferably 100, even more preferably 150, still more preferably 200, more preferably still 250, most preferably 300 L/(m²·h·Bar). In other highly preferred embodiments the water permeability is at least 500 L/(m²·h·Bar). Preferably, the water permeability is at most 5000 L/(m²·h·Bar), more preferably at most 3500, still more preferably at most 2500, even more preferably at most 1500, still more preferably at most 800, still more preferably at most 500, still more preferably at most 400, still more preferably at most 250, still more preferably at most 150, still more preferably at most 75, still more preferably at most 50, 25, 15, 10, or 5 L/(m²·h·Bar). Water permeability in the range of about 10 to about 1000 L/(m²·h·Bar) is highly suitable, about 10 to about 500 even more so, 50 to 400 even more.

In a preferred embodiment, the membrane of the invention comprises at least one polymer selected from the group consisting of polysulfone, polyethersulfone, polyphenylenesulfone, polyarylethersulfone, polyamide, polyetherimide, polyimide, polyethylene-co-vinyl alcohol, polyethylene-co-vinyl acetate, cellulose derivatives such as cellulose acetate or cellulose triacetate, polyvinylidene fluoride, polyvinylchloride, polyacrylonitrile, polyurethane, polyether ether ketone, polysaccharaides such as chitosane, and polyacrylic acid. More preferably, the membrane comprises polyethersulfone and/or polyvinylpyrrolidone, preferably both.

As a skilled person knows, mixtures of polymers can lead to attractive membranes. In a preferred embodiment, the membrane according to the invention comprises a total amount of polymer in a range of from 20 wt% to 95 wt%, preferably in a range of from 30 wt% to 75 wt%, more preferably in a range of from 40 wt% to 60 wt%, based on the dry weight of the membrane including particles. Advantageously, the membrane comprises a first polymer such as polyethersulfone (PES, see Pavlenko et al., Nature Scientific Reports, 6 (2016) 34429), an EVAL polymer such as ethylene vinyl alcohol (see Tetala & Stamatialis, Sep. Pur. Tech., 104 (2013) 214-220), or a polyimide such as polyimide P84 (see Kopeć et al., Sep. Pur. Tech., 80 (2011) 306-314), preferably PES, in an amount in a range of from 10 wt% to 50 wt%, more preferably in a range of from 20 wt% to 40 wt%, most preferably in an amount of about 30 wt%, based on the dry weight of the membrane including particles. Preferably, the membrane comprises a second polymer such as polyvinylpyrrolidone (PVP), polyethylene glycol (PEG), or polyethyleneoxide (PEO), preferably PVP, in an amount in a range of from 1 wt% to 30 wt%, more preferably in a range of from 10 wt% to 20 wt%, most preferably in an amount of about 14 wt%, based on the dry weight of the membrane including particles. A skilled person is aware that various polymers can be used, particularly when there is a polymer solvent and a non-solvent to enable the liquid induced phase separation, and preferably the particulate material does not dissolve in the polymer solvent.

Membrane morphologies can be controlled using methods known in the art. In preferred embodiments is provided the membrane according to the invention, wherein the membrane is in the form of a hollow fibre, a full fibre, or a flat sheet; preferably the membrane is a hollow fibre.

Membranes of the invention can be referred to as mixed matrix membranes (MMMs). MMMs can have one, two, three, or more layers. The membranes of the invention may be asymmetric or symmetric. In preferred embodiments, the MMM has two layers and the particulate material is present in the layer of the dual layer mixed matrix membrane that is to be closest to the dialysate. In other preferred embodiments, the particulate material is present in all layers. In other preferred embodiments, the membrane has only a single layer, which can be useful when permeability and mechanical stability of the membrane obviate the need for multiple layers.

In preferred embodiments, the membrane comprises a polymer having a molecular weight in a range of from 1,000 to 1,000,000 grams per mole (g/mol), preferably in a range of from 30,000 to 500,000 g/mol. Preferably polymer weights are number average polymer weights. The membranes of the invention preferably have a molecular weight cut off (MWCO) in a range of from 0.5 to 1000 kilodaltons (kDa), more preferably in a range of from 5 to 50 kDa, or of at most 40, more preferably at most 30, more preferably at most 25, most preferably at most 20 kDa. In preferred embodiments, the MWCO is about 20 kDa to about 50 kDa. In other preferred embodiments, such as those requiring high flux membranes, the MWCO is about 20 kDa. In other preferred embodiments, such as those requiring medium cut-off membranes, the MWCO is about 50 kDa.

In some embodiments, the membranes of the invention have an average pore size in a range of from 1 to 2000 nm, more preferably 1 to 500 nm. The pore size is preferably at least 1, more preferably at least 2, most preferably at least about 3 nm. Low pore size is preferred for dialysis applications because it helps retain blood proteins such as albumins. Preferably, a combined pore size of about 3 nm and MWCO of about 10-50 kDa such as about 20 kDa is used. Pore size can be determined using known techniques, such as gas adsorption or MWCO determination via filtration of mixture of molecules of various sizes, preferably MWCO determination.

The membranes of the invention preferably have a surface-to-volume ratio of at least 50 reciprocal centimeters (cm⁻¹), more preferably at least 100 cm⁻¹. The membranes of the invention are preferably able to endure a maximal flow rate of a mixture, preferably a dialysate or a filtrate such as a plasma filtrate, wherein the mixture comprising a nucleophilic waste solute such as urea, in a range of from 10 to 1000 milliliters per minute (mL/min), most preferably 300 to 800 mL/min. The maximal flow rate is preferably at least 10, more preferably at last 50, even more preferably at least 75, even more preferably at least 100, more preferably at least 250, more preferably at least 300 mL/min. The maximal flow rate is preferably at most 1000, more preferably at most 750, even more preferably at most 600, even more preferably at most 500, more preferably at most 400, more preferably at most 350 mL/min. For general dialysis applications a flow of 100 mL/min is sufficient. For home dialysis a flow of 300 mL/min is preferred.

The membranes of the invention preferably have an ultrafiltration coefficient K_{uf} in a range of from 60 to 600 milliliters per squared meters per hour per millimeters of mercury (mL m⁻² h⁻¹ mmHg⁻¹), more preferably in a range of from 100 to 400 mL m⁻² h⁻¹ mmHg⁻¹, most preferably in a range of from 250 to 350 mL m⁻² h⁻¹ mmHg⁻¹. Preferably the K_{uf} is at least 10, more preferably at least 50, more preferably at least 60, more preferably at least 75, more preferably at least 100 mL m² h⁻¹ mmHg⁻¹. Preferably the K_{uf} is at most 400, more preferably at most 350, more preferably at most 300, more preferably at most 250, more preferably at most 200, more preferably at most 150, more preferably at most 100 mL m² h⁻¹ mmHg⁻¹.

The membranes of the invention preferably have a swelling degree in a range of from 1% to 15%, preferably 1% to 5%, most preferably of about 2 %. Preferably, the membranes do not substantially swell, more preferably by at most 3%, even more preferably by at most 1.5%, most preferably by less than 1% such as by at most 0.5%.

Membranes according to the invention preferably have a urea binding capacity of at least 1.8 mmol/g, more preferably of at least 2.0, even more preferably at least 2.5, more preferably at least 2.6, still more preferably at least 2.7, even more preferably still at least 2.8, more preferably 2.9, still more preferably 3 mmol/g. Membranes according to the invention can preferably bind at least 0.75, more preferably 0.8 mmol/g urea after 1 hour. Membranes according to the invention can preferably bind at least 1.8, more preferably 2 mmol/g urea after at most 16 hours. This urea binding is preferably as described elsewhere herein, more preferably at 70 °C, most preferably as described in the examples.

### Urea sorbents

The membrane according to the invention comprises particulate material. The particulate material at least comprises a urea sorbent. In preferred embodiments, the particulate material consists of a urea sorbent.

A sorbent is a material that binds target substances - in this case the sorbent is a urea sorbent, and therefore it binds urea. Urea sorbents are well known in the art, as described in the section on background of the invention. The two major modes for binding of urea are via covalent binding and via adsorption, in particular physisorption. Covalent binding is sometimes referred to as chemisorption. It is preferred that urea sorbents for use in membranes according to the invention are urea sorbents that covalently capture urea. In other preferred embodiments, multiple types of urea sorbents are used, in which at least one urea sorbent covalently captures urea. Preferably, binding comprises covalent capture of urea, wherein at least 10% of urea binding is covalent capture of urea. More preferably, binding comprises at least 50% covalent capture of urea, more preferably at least 70%, more preferably at least 80%, even more preferably at least 90% covalent capture. In other preferred embodiments, substantially all urea capture is covalent urea capture. A urea sorbent for use in the invention preferably has a urea binding capacity of more than 0.01, 0.05, 0.1, 0.2, 0.3, 0.4, 0.5, 0.6, 0.7, 0.8, 0.9, 1.0,1 1.1, 1.2, 1.3, 1.4, 1 or 1.5 mmol urea per gram of sorbent; more preferably the sorbent has a urea binding capacity of more than 0.1 mmol urea per gram of sorbent; even more preferably the sorbent has a urea binding capacity of more than 0.5 mmol urea per gram of sorbent; still more preferably the sorbent has a urea binding capacity of more than 1, still more preferably more than 1.5, even more preferably of more than 2 mmol urea per gram of sorbent, such as of more than 2.5 or of more than 2.6 mmol urea per gram of sorbent. Covalency of urea capture can be assessed using spectroscopic techniques.

Examples of urea sorbents are ninhydrin-type sorbents (e.g. EP121275A1; US4897200A; WO2019110557); phenylglyoxaldehyde (PGA)-type sorbents (e.g. DE2305186A1; US3933753A; US4012317; WO2004078797A1; EP19210947); aldehyde-based sorbents such as triformylmethyl (TFM)-type sorbents (capture of urea by TFM is described in Jong et al., ACS Omega 2019, 4, 11928-11937); copper-complexed sorbents such as copper-chitosan-type sorbents (e.g. WO2014007716); para-functionalized polystyrene-type sorbents featuring for example para-thio, para-nitro, or para-amino moieties (e.g. US4178241A); silica-based sorbents with free hydroxyl- or amino-moieties (e.g. Cheah et al (Materials Chemistry and Physics, 175 (2016), 151-157); epoxide-covered sorbents (e.g. WO2011102807A1); enzyme-based sorbents such as particles with immobilized urease enzymes (e.g. WO2011102807A1); and reduced graphene-based sorbents (e.g. WO2016126596). Examples of urea sorbents that covalently capture urea are ninhydrin-type sorbents; phenylglyoxaldehyde (PGA)-type sorbents; triformylmethyl (TFM)-type sorbents; epoxide-covered sorbents; and reduced graphene-based sorbents.

The inventors achieved good results using a urea sorbent, wherein the urea sorbent is a macromolecular composition comprising a polymeric backbone grafted with moieties that can covalently capture urea, wherein the moieties that can covalently capture urea preferably comprise two or more neighboring carbonyl groups or a hydrate thereof that covalently captures urea. In preferred embodiments is provided a membrane comprising such a sorbent. More features and definitions are provided later herein. Moieties with two or more neighboring carbonyl groups can also be hydrates thereof, as these groups often spontaneously hydrate and dehydrate at ambient conditions, in an equilibrium. It is to be understood that neighboring carbonyl groups need not be directly adjacent, where a C(=O) moiety is directly linked to an adjacent C(=O) moiety; groups wherein two or more carbonyl moieties can participate in the same resonance stabilization isomers should also be considered, for example where two or more carbonyl moieties are separated only by unsaturated carbon or by a double bond. Examples of suitable moieties are shown in the following table, with reference names and reference numbers shown below them.

| | | |
|---|---|---|
| 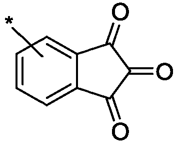 | 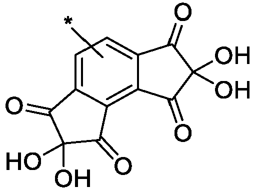 | 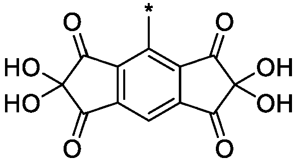 |
| 1) Indanetrione | 2) m-bisninhydrin | 3) p-bisninhydrin |
| 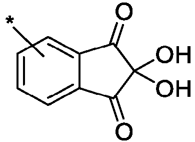 | 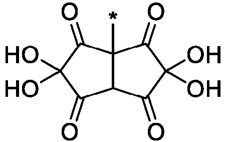 | 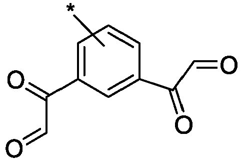 |
| 4) Ninhydrin | 5) hexaketone hydrate | 6) bis-PGA |
| 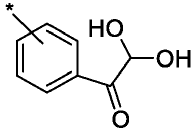 | 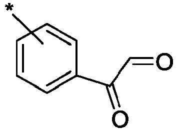 | 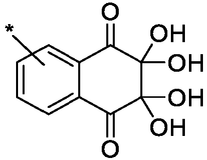 |
| 7) PGA hydrate | 8) PGA | 9) oxolin |
| 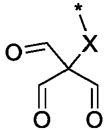 | 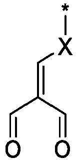 | 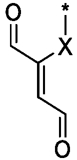 |
| 10) TFM | 11) dialdehyde | 12) E-dialdehyde |

In the table above, the star represents the site where the represented moiety is connected to the polymeric backbone. X represents a linker moiety that comprises from 1 to 10 backbone atoms selected from C, N, O, and S, substituted with H to complete valency. Examples of X can be -CH₂-, -O-CH₂CH₂-, and phenyl. X is preferably -CH₂-. The moieties can be further substituted, such as with C₁₋₆hydrocarbon, or C₁₋₆alkoxy, or nitro, nitrile, amino, hydroxyl, carboxyl, phosphate moieties, et cetera. Variations in the structure of the sorbent are possible and use of such sorbents in a membrane is encompassed by the present invention.

Examples 1, 2, 3, and 4 from the above table are moieties that when connected to a polymeric backbone constitute ninhydrin-type sorbents. Examples 6, 7, and 8 from the above table are moieties that when connected to a polymeric backbone constitute PGA-type sorbents. Example 10 from the above table is a moiety that when connected to a polymeric backbone constitutes a TFM-type sorbent. Example 1 and 4 coexist in an equilibrium at ambient conditions. Examples 7 and 8 do the same.

In especially preferred embodiments, the urea sorbent is selected from a ninhydrin-type sorbent, a phenylglyoxaldehyde-type sorbent, and/or a triformylmethyl-type sorbent. In other preferred embodiments, the urea sorbent is selected from a ninhydrin-type sorbent and/or a TFM-type sorbent. In other preferred embodiments, the urea sorbent is selected from a ninhydrin-type sorbent and/or a PGA-type sorbent. In other preferred embodiments, the urea sorbent is selected from a TFM-type sorbent and/or a PGA-type sorbent. In particularly preferred embodiments, the sorbent is a ninhydrin-type sorbent. In particularly preferred embodiments, the sorbent is a TFM-type sorbent. In particularly preferred embodiments, the sorbent is a PGA-type sorbent.

The particle size of the particulate material is at most 250 µm along the largest diameter. Preferably, it is at most 200, more preferably at most 180, more preferably at most 160, more preferably at most 150, more preferably at most 130, more preferably at most 110, more preferably at most 100, still more preferably at most 90, even more preferably at most 80, still more preferably at most 70 µm along the largest diameter. In preferred embodiments is provided the membrane according to the invention, wherein the particle size of the particulate material is at most 150 µm along the largest diameter, preferably at most 85 µm, more preferably at most 70 µm.

In preferred embodiments, the sorbent particles have a regular, in particular spherical, or an irregular shape. The sorbent particles are preferably porous, more preferably having a surface area to weight ratio as described in Pavlenko et al., Nature Scientific Reports, 6 (2016) 34429). The sorbent particles may be applied as shards, fibres, powders, or a combination thereof. Powders include, but are not limited to, metal powders, plastic powders, normal phase silica, fumed silica and activated carbon. Particles are preferably substantially round or spherical as a result of grinding or milling a granulated sorbent. Smaller particles allow a thinner membrane to be formed. It is therefore preferred that the particles have a largest diameter of at most 65 µm or 63 µm, more preferably at most 60 µm, even more preferably at most 50 µm, most preferably at most 40 µm. The largest diameter is preferably at least 5 µm, more preferably at least 10 µm, even more preferably at least 15 m, most preferably at least 20 µm. For example, a range of 20-40 µm is highly preferred for urea sorbent particles.

In preferred embodiments the sizes of the preceding two paragraphs pertain to the urea sorbent size and not to the size of other particles comprised in the particulate material. Most preferably the sizes pertain to all particulate material.

In a preferred embodiment, the sorbent particles have a size in the smallest dimension of at most 100, preferably of at most 63 µm, more preferably a size in the smallest dimension in a range of from 0.05 µm to 60 µm. It will be understood that the sorbent particles may be, *inter alia,* spheres or ellipsoids. Preferably, the sorbent particles are substantially spherical. In that case, the smallest dimension is the diameter of the sorbent particle. In the event that the sorbent particle is an ellipsoid, the largest dimension of the sorbent particle is preferably at most 150 µm, more preferably at most 100 µm, more preferably still at most 80 µm, most preferably at most 63 µm.

Preferably, the sorbent particles have a size in the smallest dimension in a range of from 0.05 µm to 100 µm, more preferably in a range of from 0.1 µm to 63 µm, even more preferably in a range of from 0.5 µm to 60 µm, more preferably still in a range of from 1 µm to 50 µm, and most preferably in a range of from 5 µm to 45 µm.

It will be understood that the size of the sorbent particles can be determined and/or controlled by using techniques such as grinding, milling, cutting, and/or sieving, which is standard procedure in the art. The size of a particle can be determined using for example light scattering or microscopy such as electron microscopy, such as demonstrated in the Examples. In preferred embodiments, the size of particles is determined using electron microscopy. In preferred embodiments, at least 80% of particles is below the recited size along the largest diameter, more preferably at least 90% are below the recited size, even more preferably at least 95%, still more preferably at least 99%, most preferably 100% is below the recited size.

In preferred embodiments, the particulate material is present in the membrane in a range of from 5 wt% to 80 wt%, preferably of from 25 wt% to 70 wt%, based on the total dry weight of the membrane and the particulate material.

Preferably, at least 5, 10, 15, 20, 25, 30, 35, 40, 45, 50, 55, 60, 65, or 70 wt% of particular material is present. More preferably at least 10, even more preferably at least 15, still more preferably at least 20, most preferably at least about 25 wt% particular material is present. Preferably, at most 75, 70, 65, 60, 55, 50, 45, 40, 35, 30, 25, 20, 15, or 10 wt% of particular material is present. More preferably at most 60, even more preferably at most 50, still more preferably at most 40, most preferably at most about 30 wt% particular material is present.

In preferred embodiments the wt% of the preceding two paragraphs pertains to the urea sorbent wt% and not to the wt% of other particles comprised in the particulate material. Most preferably the wt% pertains to all particulate material.

In a preferred embodiment, the at least one sorbent particle has a Brunauer-Emmet-Teller (BET) surface area of at least 0.5 m²/g, more preferably of at least 0.8 m²/g, more preferably still of at least 1 m²/g, even more preferably of at least 1.5 m²/g, most preferably of at least 5 m²/g. Preferably, the BET surface area of the sorbent particle is in a range of from 0.5 m²/g to 10,000 m²/g, more preferably in a range of from 10 m²/g to 2,500 m²/g.

In a preferred embodiment, the at least one sorbent particle has an average pore diameter in a range of from 0.1 to 250 nm, most preferably from 25 to 150 nm. In a preferred embodiment, the at least one sorbent particle has an average pore volume in a range of from 0.001 to 0.12 mL/g, more preferably from 0.01 to 0.10 ml/g, most preferably from 0.02 to 0.09 mL/g. In a preferred embodiment, at least one additional sorbent particle is embedded in the membrane of the invention. The additional sorbent particle may advantageously have the same size, shape, BET surface area, and/or pore size as the sorbent particles as defined herein above. In a preferred embodiment, the total amount of sorbent particles embedded in the membrane is in a range of from 5 wt% to 80 wt%, preferably in a range of from 25 wt% to 70 wt%, more preferably in a range of from 40 wt% to 60 wt%, based on the dry weight of the membrane including particles.

### Further details of sorbents

In the context of this invention, a sorbent is a macromolecular composition that is a solid, a suspended solid, a colloidal suspension, an aggregate, a resin, or a polymer that can be dissolved or partially dissolved. It can bind nucleophilic waste solutes, and a urea sorbent at least binds urea, after which the sorbent can be recovered from a mixture. The binding can be covalent, or non-covalent such as via electrostatic interactions or via hydrophobic interactions.

A PGA-type sorbent is a sorbent that comprises PGA-type moieties. PGA is phenylglyoxaldehyde or 1-phenylethan-1,2-dione or phenyloxaldehyde. A PGA-type moiety is preferably a short aliphatic structure, preferably having only two carbon atoms, featuring two vicinal carbonyl groups (or a hydrate thereof), attached to an aromatic ring or aromatic ring-system, preferably attached to a phenyl moiety or a substituted phenyl moiety (for example substituted with a polymeric backbone). A glyoxaldehyde and its hydrate readily convert into one another, and it is to be understood that reference to PGA generally also entails reference to its hydrate. Generally, a hydrate of a glyoxaldehyde forms in non-dry environments, and the glyoxaldehyde can be dehydrated through heating; in aqueous environments both species generally coexist in an equilibrium. Preferred examples of PGA-type moieties are selected from the group consisting of orto-oxaldehydylphenyl, meta-oxaldehydylphenyl, and para-oxaldehydylphenyl, and their hydrates, wherein the phenyl ring can be optionally further substituted. In some embodiments the PGA-type moieties are selected from the group consisting of orto-oxaldehydylphenyl and meta-oxaldehydylphenyl. In other embodiments the PGA-type moieties are selected from the group consisting of orto-oxaldehydylphenyl and para-oxaldehydylphenyl. In some embodiments the PGA-type moieties are selected from the group consisting of meta-oxaldehydylphenyl and para-oxaldehydylphenyl. Most preferably the PGA-type moieties are para.

PGA-type sorbents suitable for use in the invention are suitable for binding nucleophilic waste solutes and do so at high capacity. These solutes react with the PGA-like moieties comprised in the sorbent. Preferably the PGA-type sorbent has a urea binding capacity of more than 1.60, preferably of more than 1.80, more preferably more than 2.00 mmol urea per gram of sorbent.

A ninhydrin-type sorbent is a sorbent that comprises ninhydrin-type moieties. Ninhydrin is 2,2-dihydroxy-1H-indene-1,3(2H)-dione, and is also known as 2,2-Dihydroxyindane-1,3-dione and 1,2,3-Indantrione hydrate. A ninhydrin-type moiety is preferably a hydrate of a five-membered ring-structure with three vicinal carbonylgroups, anellated to two adjacent positions of an aromatic ring or aromatic ring-system, preferably anellated to a phenyl moiety. Preferred examples of ninhydrin-type moieties are selected from the group consisting of 4-[2,2-dihydroxy-1H-indene-1 ,3(2H)]-dionyl, 5-[2,2-dihydroxy-1H-indene-1,3(2*H*)]-dionyl, 6-[2,2-dihydroxy-1*H*-indene-1,3(2*H*)]-dionyl, and 7-[2,2-dihydroxy-1H-indene-1 ,3(2H)]-dionyl. More preferred ninhydrin-type moieties are selected from the group consisting of 5-[2,2-dihydroxy-1H-indene-1,3(2H)]-dionyl and 6-[2,2-dihydroxy-1H-indene-1,3(2H)]-dionyl. Ninhydrin has an axis of symmetry, so that 5-[2,2-dihydroxy-1H-indene-1,3(2*H*)]-dionyl and 6-[2,2-dihydroxy-1*H*-indene-1,3(2H)]-dionyl are identical if no other substituents are present.

Ninhydrin-type sorbents suitable for use in the invention are suitable for binding nucleophilic waste solutes. These solutes react with the ninhydrin-like moieties comprised in the sorbent. Preferably a ninhydrin-type sorbent has a urea binding capacity of more than 1.4, preferably of more than 2.1 mmol urea per gram of sorbent.

Urea is a small, highly polar molecule that, by virtue of its polarity and capability to participate in hydrogen bond formation, is highly soluble in water (>400 mg/ml) and in protic organic solvents such as methanol, ethanol, and glycerol. While the role of urea in biochemistry is essential, and it is an important molecule industrially, including as a source of nitrogen for fertilizer and as a polymer precursor, it is often important for urea to be removed from fluid solutions.

A PGA-type sorbent for use in the invention preferably has a urea binding capacity of more than 1.51, 1.52, 1.53, 1.54, 1.55, 1.56, 1.57, 1.58, 1.59, 1.60, 1.61, 1.62, 1.63, 1.64, 1.65, 1.67, 1.68, 1.69, 1.70, 1.71, 1.72, 1.73, 1.74, 1.75, 1.76, 1.77, 1.78, 1.79, 1.80, 1.85, 1.90, 1.95, 2.00, 2.05, 2.10, 2.15, 2.20, 2.25, 2.30, 2.35, 2.40, 2.45, 2.50, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, or 4.9 mmol urea per gram of sorbent; more preferably the sorbent has a urea binding capacity of more than 1.60 mmol urea per gram of sorbent; even more preferably the sorbent has a urea binding capacity of more than 1.80 mmol urea per gram of sorbent; still more preferably the sorbent has a urea binding capacity of more than 2.00, still more preferably more than 2.20, even more preferably of more than 2.40, 2.45, 2.50, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, or 4.9 mmol urea per gram of sorbent, such as of more than 2.5 or of more than 2.6 mmol urea per gram of sorbent.

A ninhydrin-type sorbent preferably has a urea binding capacity of more than 1.5 mmol urea per gram of sorbent. In more preferred embodiments of this aspect, the sorbent has a urea binding capacity of more than 1.6 mmol urea per gram of sorbent. In further preferred embodiments the ninhydrin type sorbent has a urea binding capacity of more than 1.63, 1.64, 1.65, 1.67, 1.68, 1.69, 1.70, 1.71, 1.72, 1.73, 1.74, 1.75, 1.76, 1.77, 1.78, 1.79, 1.80, 1.85, 1.90, 1.95, 2.00, 2.05, 2.10, 2.15, 2.20, 2.25, 2.30, 2.35, 2.40, 2.45, 2.50, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, or 4.9 mmol urea per gram of sorbent; more preferably the sorbent has a urea binding capacity of more than 2.10 mmol urea per gram of sorbent; even more preferably the sorbent has a urea binding capacity of more than 2.20 mmol urea per gram of sorbent; most preferably the sorbent has a urea binding capacity of more than 2.40 mmol urea per gram of sorbent, such as of more than 2.5 or of more than 2.6 mmol urea per gram of sorbent.

In this context, the urea binding capacity of a sorbent is preferably the maximum urea binding capacity, which is preferably the capacity that can be determined after incubation of a sorbent with an excess of urea in a solution (such as about 30 mM) at about 70 °C for about 24 hours. The amount of bound urea can be determined by directly analysing the amount of urea bound to the sorbent, or by analysing the difference between the amount of urea present in the solution before and after exposure to the sorbent, or by regenerating the sorbent by dissociating the bound urea, and subsequent determination of the amount of released urea. Urea concentration can be determined by any method known in the art, such as by elemental analysis as described in WO2004078797. Alternately, the amount of ammonia released by an urease enzyme can be used to indirectly quantify urea concentrations. Alternately, a PAB reagent solution containing about 4% (w:v) of 4- (dimethylamino)benzaldehyde and 4% (v:v) sulphuric acid in absolute ethanol can be used for UV-VIS analysis (422 nm) of the urea reaction adduct using a previously prepared calibration curve, as described in WO2016126596. Various kits for determining urea concentration are commercially available, and contain instructions for use. Urea binding capacity of a sorbent is preferably that of the free sorbent, as particles that are not yet embedded in a membrane according to the invention.

In PGA- or ninhydrin-type sorbents preferably at least 5%, 10%, 15%, 20%, 25%, 30%, 35%, 40%, 45%, 50%, 55%, 60%, 65%, 70%, 75%, 80%, 85%, 90%, 95%, or 100% of the polymerized monomers is a PGA- or ninhydrin-type monomer. A preferred PGA- or ninhydrin-type sorbent is a PGA- or ninhydrin-type sorbent wherein at least 30% of the polymerized monomers is a PGA- or ninhydrin-type monomer, preferably at least 50%, more preferably at least 60%, even more preferably at least 70%, still more preferably at least 80%, and most preferably at least 90%. In further preferred PGA- or ninhydrin-type sorbents at least 50% and at most 90% of the polymerized monomers is a PGA- or ninhydrin-type monomer. In more preferred embodiments, 55% to 90% of the polymerized monomers is a PGA- or ninhydrin-type monomer. In even more preferred embodiments, 70% to 90% of the polymerized monomers is a PGA- or ninhydrin-type monomer. In most preferred embodiments, 70% to 80% of the polymerized monomers is a PGA- or ninhydrin-type monomer. The amount of PGA- or ninhydrin-type monomer can be assessed using conventional techniques known in the art, such as solid state NMR or IR spectroscopy. In a particular embodiment 100% of the polymerized monomers is a PGA- or ninhydrin-type monomer.

In preferred embodiments, the PGA- or ninhydrin-type sorbent according to the invention is obtainable by polymerization, preferably suspension polymerisation. In preferred embodiments, the PGA- or ninhydrin-type sorbent is obtainable by polymerisation wherein at most 50%, preferably at most 35%, more preferably at most 25%, even more preferably at most 20%, most preferably at most 10% cross-linking monomer is used.

During polymerization to produce a sorbent, a comonomer that is not a PGA- or ninhydrin-type monomer or a precursor thereof can also be present. Comonomers are further monomers that undergo polymerization and become covalently incorporated in the resulting polymer. Such a resulting polymer is often referred to as a copolymer, but for sake of clarity this document will only refer to polymers as such, where the context will make it clear whether a copolymer could also be referenced. In the context of this invention, two classes of comonomers are particularly relevant: hydrophilic comonomers and crosslinking comonomers.

In preferred embodiments, a sorbent comprises at least one comonomer, wherein the comonomer is preferably selected from the group consisting of styrene, isopropenylbenzene, divinylbenzene, vinylbenzenesulfonic acid, acrylic acid, methacrylic acid, methyl acrylate, methyl methacrylate, ethyl acrylate, ethyl methacrylate, acrylonitrile, 2-hydroxyethyl 2-methylprop-2-enoate (HEMA), 2-hydroxypropyl 2-methylprop-2-enotate, 2-hydroxyethyl prop-2-enoate, 2-hydroxypropyl prop-2-enotate, N-(2-hydroxyethyl)methacrylamide, N-(2-hydroxypropyl)methacrylamide (HPMA), N-(2-hydroxyethyl)acrylamide, N-(2-hydroxypropyl)acrylamide, a telechelic N,N'-alkylenebisacrylamide such as *N,N'-*methylenebisacrylamide (NMAA), N-isopropylacrylamide (NIPAm), divinyl sulfone, butadiene, methacrylonitrile, vinylsulfonamide, N-alkyl vinylsulfonamide such as N-methyl vinylsulfonamide, and N,N-dialkyl vinylsulfonamide such as N,N-dimethyl vinylsulfonamide. In more preferred embodiments, the comonomer is selected from the group consisting of divinylbenzene, vinylbenzenesulfonic acid, acrylic acid, (meth)acrylonitrile, vinylsulfonamide, N-alkyl vinylsulfonamide N,N-dialkyl vinylsulfonamide, and 2-hydroxyethyl 2-methylprop-2-enoate (HEMA). Even more preferably, the comonomer is selected from the group consisting of divinylbenzene and vinylbenzenesulfonic acid. Most preferably, both divinylbenzene and vinylbenzenesulfonic acid are present. In the context of this document, divinylbenzene can be either 1,2-diethenylbenzene, 1,3-diethenylbenzene, or 1,4-diethenylbenzene, or mixtures thereof. 1,4-diethenylbenzene or mixtures comprising 1,4-diethenylbenzene are preferred because these provide a more spacious crosslink, which improves the solvent-permeability of the resulting polymer. In the context of this document, vinylbenzenesulfonic acid can be either 2-vinylbenzenesulfonic acid, 3-vinylbenzenesulfonic acid, or 4-vinylbenzenesulfonic acid, or mixtures thereof. 4-vinylbenzenesulfonic acid is preferred because of its desirable polymerization kinetics.

For crosslinked sorbents, it is preferred that at least one crosslinking comonomer is present. A crosslinking comonomer generally has more than one reactive moiety that can participate in the polymerization reaction. Preferably, such a crosslinking comonomer is selected from the group consisting of: divinylbenzene, a telechelic N,N'-alkylenebisacrylamide such as N,N'-methylenebisacrylamide (NMAA), divinyl sulfone, and butadiene, preferably divinylbenzene is provided during polymerization to form the sorbent. In the context of this document, the amount of crosslinking is defined as the amount of crosslinking comonomers that was present in the polymerization mixture during formation of the sorbent. A larger amount of crosslinking results in more dense sorbents; a smaller amount of crosslinking results in more porous or more macroporous sorbents. Preferably, at most 10% crosslinking comonomer is present. More preferably, at most 5% crosslinking comonomer is present. Even more preferred, for crosslinked sorbents, from 0.1% to 5% crosslinking comonomer is present, more preferably 0.2% to 4% crosslinking comonomer is present, even more preferably 0.4% to 4% crosslinking comonomer is present, most preferably 0.8% to 3% crosslinking comonomer is present, such as about 1% to about 2%, or about 2%.

A sorbent comprising a hydrophilic comonomer is referred to herein as a hydrophilic sorbent. A hydrophilic comonomer enables aqueous solvents to more easily permeate the sorbent, so that nucleophilic waste solutes can similarly more easily permeate the sorbent. This allows the interior of the sorbent to also participate in the binding of nucleophilic waste solutes. There is a balance, because hydrophilic comonomers generally cannot bind nucleophilic waste solutes in the way that PGA- or ninhydrin-type moieties can. Thus, the increase in hydrophilic comonomer content makes PGA- or ninhydrin-type moieties more effective, but reduces their number.

For hydrophilic sorbents, it is preferred that at least one hydrophilic comonomer is present. Preferably, such a hydrophilic comonomer is selected from the group consisting of: vinylbenzenesulfonic acid, acrylic acid, methacrylic acid, methyl acrylate, methyl methacrylate, ethyl acrylate, ethyl methacrylate, 2-hydroxyethyl 2-methylprop-2-enoate (HEMA), 2-hydroxypropyl 2-methylprop-2-enotate, 2-hydroxyethyl prop-2-enoate, 2-hydroxypropyl prop-2-enotate, N-(2-hydroxyethyl)methacrylamide, N-(2-hydroxypropyl)methacrylamide (HPMA), N-(2-hydroxyethyl)acrylamide, N-(2-hydroxypropyl)acrylamide, and N-isopropylacrylamide (NIPAm), more preferably from the group consisting of: vinylbenzenesulfonic acid, acrylic acid, methacrylic acid, 2-hydroxyethyl 2-methylprop-2-enoate (HEMA), 2-hydroxypropyl 2-methylprop-2-enotate, 2-hydroxyethyl prop-2-enoate, 2-hydroxypropyl prop-2-enotate, N-(2-hydroxyethyl)methacrylamide, N-(2-hydroxypropyl)methacrylamide (HPMA), N-(2-hydroxyethyl)acrylamide, and N-(2-hydroxypropyl)acrylamide, preferably vinylbenzenesulfonic acid is present. A skilled person will understand that some comonomers such as methyl methacrylate can easily be postmodified to become hydrophilic through hydrolysis of their ester. Preferably, at most 60% hydrophilic comonomer is present. More preferably, at most 50% hydrophilic comonomer is present. Even more preferred, for hydrophilic sorbents, from 0% to 50% hydrophilic comonomer is present, more preferably 0% to 40% hydrophilic comonomer is present, even more preferably 5% to 40% hydrophilic comonomer is present, more preferably still 10% to 35% hydrophilic comonomer is present, even more preferably still 15% to 35% hydrophilic comonomer is present, most preferably 20% to 30% hydrophilic comonomer is present, such as about 25%.

Schematic examples of suitable sorbents are shown below. The square brackets separate different monomer types as comprised in the sorbents. The monomers are preferably present as a random or statistic copolymer. Suitable amounts for different monomer types are described elsewhere herein.

| | | |
|---|---|---|
| 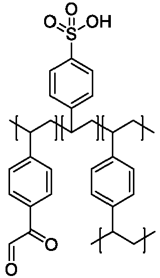 | 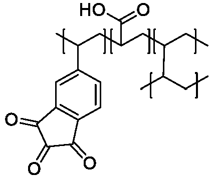 | 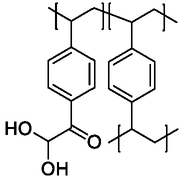 |
| Sorbent with PGA-type urea binding moieties, vinylbenzenesulfonic acid comonomer, and DVB crosslinker | Sorbent with ninhydrin-type urea binding moieties, acrylic acid comonomer, and butadiene crosslinker | Sorbent with PGA-type urea binding moiety, crosslinked with DVB |

### Further properties of the membrane

Further additives can be present in the membrane, such as in the polymeric matrix, as is known in the art. For example, in preferred embodiments is provided a membrane according to the invention, wherein the particulate material further comprises activated carbon particles, ion exchange particles such as ion exchange resin particles or ion exchange silica particles, silica particles such as unmodified silica particles or alkylated silica particles, zeolite particles, ceramic particles, polymeric particles such as porous polymeric particles or non-porous polymeric particles, and/or molecularly imprinted particles, and/or
wherein the membrane further comprises an additive such as a hydrophilic additive, preferably polyvinylpyrrolidone, chitosan, polyethylene glycol, dextran, glycerol, diethylene glycol, octanol, oxalic acid, maleic acid, tartaric acid, fumaric acid, lithium chloride, and/or calcium chloride.

Accordingly in a preferred embodiment, the membrane according to the invention further comprises at least one hydrophilic additive. Addition of the hydrophilic additive to the membrane can help to tailor the membrane morphology, improves the membrane water transport, decreases membrane fouling, increases the hemocompatibility of the membrane, or a combination thereof. Preferably, the hydrophilic additive is present in an amount in a range of from 0.01 wt% to 50 wt%, more preferably in a range of from 0.5 to 10 wt.%, based on the dry weight of the membrane including particles. More preferably, the additive is present at at least 1, preferably 2, more preferably 5, even more preferably 10 wt%. More preferably the additive is present at at most 15, more preferably 8, more preferably 3 wt%.

It is preferred that the hydrophilic additive is selected from the group consisting of polyvinylpyrrolidone, polyethylene glycol, dextran, glycerol, diethylene glycol, octanol, oxalic acid, maleic acid, tartaric acid, fumaric acid, lithium chloride, and calcium chloride. Most preferably, the hydrophilic additive is polyvinylpyrrolidone. The polyvinylpyrrolidone preferably has a molecular weight in a range of from 2,500 to 2,500,000 g/mol, more preferably in a range of from 2,500 to 500,000 g/mol.

A membrane generally has two main surfaces. In case of a sheet, these are the opposing surfaces of the plane that roughly defines the sheet. Both of these surfaces can be seen as outer surfaces. In case of a hollow fibre, the outer surface and the inner surface are the two main surfaces. The inner surface defines the boundary between the membrane itself and its lumen. A full fibre has no bore, and thus has no inner surface in this sense, although it may have a porous structure that does provide a surface area; this surface area does not separate the membrane from a lumen. Surfaces can be smooth or rough, and can be non-corrugated or corrugated, as is known in the art. Corrugation refers to ribs that protrude from the surface. Preferably the corrugations are substantially or entirely parallel. Preferably, the corrugation is along the longest dimension of a membrane. A corrugation preferably protrudes at least 5% relative to the average membrane thickness, more preferably at least 10%, even more preferably 20%, still more preferably 30%, most preferably at least 40%. A corrugation preferably protrudes at most 150% relative to the average membrane thickness, more preferably at most 100%, even more preferably 75%, still more preferably 60%, most preferably at most 50%. In preferred embodiments, at least one surface is smooth. In preferred embodiments, only one surface is smooth. In preferred embodiments, both surfaces are smooth. In preferred embodiments, at least one surface is corrugated. In preferred embodiments, only one surface is corrugated. In preferred embodiments, both surfaces are corrugated. It is highly preferred that when a surface is an outer surface, it is smooth, most preferably smooth and non-corrugated. It is highly preferred that when a surface is an inner surface, it is corrugated, most preferably corrugated and smooth. As is known, corrugation increases surface area and can therefore be preferred for any surface where an increased surface area is desired.

In a preferred embodiment, at least one additional type of sorbent particle is comprised in the membrane of the invention. The additional sorbent particle may advantageously have the same size, shape, BET surface area, and/or pore size as the urea sorbent particles defined elsewhere herein. Preferably, the at least one additional sorbent particle is selected from the group consisting of activated carbon particles, ion exchange resins, unmodified silica particles, C₂-derivitised silica particles, C₄-derivitsed silica particles, C₆-derivitsed silica particles, C₈-derivitsed silica particles, C₁₆-derivitsed silica particles, ion exchange silica particles, zeolites, zirconia such as zirconium phosphate or zirconium oxide or zirconium oxyhydroxide or zirconium carbonate, ceramic particles, porous polymeric particles, non-porous polymeric particles, and molecular imprinted particles. Herein, it will be understood that ion exchange resins may be weak or strong cation exchange resins or weak or strong anion exchange resins.

In preferred embodiments, the additional sorbent particle is an activated carbon particle. This is particularly advantageous, as activated carbon particles may remove waste solutes (particularly compounds other than urea) from a mixture.

Activated carbon particles preferably have an average pore size in a range of from 0.1 to 20 nm, most preferably from 1 to 5 nm. In another aspect, activated carbon particles preferably have a size in a range of from 0.1 to 100 µm, preferably in a range of from 0.1 to 30 µm, most preferably the activated carbon particles are smaller than 25 µm. In some embodiments, activated carbon particles have a Brunauer-Emmet-Teller (BET) surface area from 100 to 10,000 squared meters per gram (m²/g), most preferably 2000 m²/g. Activated carbon particles are optionally impregnated with at least one inorganic impregnate selected from the group consisting of iodine, silver, aluminum, manganese, zinc, iron, lithium, and calcium. Preferably, aluminum, manganese, zinc, iron, lithium, and calcium are in their cationic form. In preferred embodiments there is no such impregnation. Activated carbon particles are preferably selected from the group consisting of AC Norit A Supra particles and CMK3 particles.

### Production of the membrane

The membrane according to the invention can be prepared using techniques that are known in the art. Particle-comprising membranes are known in the art, for example from WO2006019293 or from Geremia et al. (DOI: 10.1016/j.actbio.2019.04.009). A production method for preparing a membrane according to the invention differs in that it uses urea sorbent particles having a size of at most 250 µm along the largest diameter. Accordingly, in an aspect the invention provides a method for the preparation of a membrane according to the invention, comprising the steps of
i. providing urea sorbent particles having a size of at most 250 µm along the largest diameter;
ii. mixing the urea sorbent particles with polymeric material in a solvent for the polymeric material to obtain a mixture;
iii. extruding or casting the mixture to form a membrane; and
iv. solidifying said membrane, preferably by phase inversion.

Such a method is referred to herein as a production method according to the invention.

In step i. urea sorbent particles are provided. These particles have been defined earlier herein. In preferred embodiments, the particles have a size of at most 200 µm, preferably at most 150 µm, more preferably at most 100 µm, even more preferably at most 70 µm, still more preferably at most 50 µm along the largest diameter. Particles can be produced as part of the method according to the invention, or they can be acquired from commercial sources. In preferred embodiments, particles are sized as part of step i. This sizing is to bring the particles in a desired size range. Sizing can be performed by milling, grinding, crushing, or cutting, or any other materials processing method known in the art. Sizing can also comprise sieving, which is a convenient way to ensure an upper size cut-off. Preferred urea sorbent particles swell at most 20% along their longest axis when suspended in a liquid. More preferably, particles swell at most 15%, even more preferably at most 10%, still more preferably at most 5%, most preferably at most 2%. It is highly preferred that particles substantially do not swell when suspended in a liquid, which improves mechanical stability of resulting membranes after sequential wetting and dewetting, or during storage.

In step ii the urea sorbent particles are mixed with polymeric material in a solvent for the polymeric material. This resulting suspension thus comprises dissolved polymers, which later constitute the membrane, with sorbent particles suspended therein. Mixing can be performed using any known method, such as described below or demonstrated in the examples. Preferably, mixing is performed for at least 1, 2, 3, 4, 5, 6, 12, 18, 24, 36, 48, 72 hours or more. Preferably mixing is performed for at most 120 hours, more preferably at most 96 or 72 hours such as 72 hours. Preferably the urea sorbent particles are individually suspended in the solvent, not forming aggregates. Additional components of the membrane according to the invention can be conveniently added here, such as further particles or such as additives for the membrane. These further components are then part of the mixture obtained in step ii.

The mixture of step ii preferably has a viscosity of at least 1.5 Pa·s, more preferably at least 10 Pa·S, most preferably at least about 12.5 Pa·s such as about 15 Pa·s. The mixture of step ii preferably has a viscosity of at most 150 Pa·s, more preferably of at most 100 Pa·s, even more preferably of at most 50 Pa·s, most preferably of at most 25 Pa·s such as at most 20 Pa·s. Viscosity can be determined using any method known in the art. Preferably, a Stormer viscometer is used.

In step iii the mixture of dissolved polymer and suspended urea sorbent is extruded, such as coextruded, or cast to form the membrane. Details suitable for this step are described below, and are demonstrated in the examples.

In step iv, which is optional, the formed membrane is solidified. This can be performed using any known method, such as described below or such as demonstrated in the examples. A production method according to the invention preferably comprises step iv.

More details of the method are preferably as follows: the method according to the invention preferably comprises a coextrusion step using a spinning head with at least two concentrically arranged outlet openings, wherein a stream (A) containing particulate material and a stream (B) of polymeric material in a solvent for the polymeric material are being fed separately and simultaneously through two adjacent outlet openings, after which the two streams are subjected to phase inversion, preferably wherein the two streams are subjected to a two-step phase inversion process, to obtain the membrane according to the invention as a fibre having porous layers. Preferably the stream (A) is a mixture comprising 0 - 50 wt% of the polymeric matrix and 1 - 100 wt% of the particulate material. Preferably the stream (B) comprises 3 to 50 wt% of polymeric material. Preferably the two-step phase inversion process involves using a triple layer spinneret in which a stream (C) of liquid, vapor, or gas, preferably liquid, is being fed through the third, outermost outlet opening to allow for control of pore size of the outer porous layer. It is further preferred that the stream (A) is fed through the spinning head on the inside of the stream (B). Moreover, preferably a stream (D) of polymeric material in a solvent for the polymeric material is coextruded, wherein the outlet opening through which stream (A) is being fed is sandwiched between the outlet openings through which streams (B) and (D) are being fed, after which the three streams are subjected to phase inversion, to obtain a membrane according to the invention as a fibre having three porous layers. The step of phase inversion is preferably followed by a heat treatment, a chemical treatment, a stretching or a further functionalization step to activate the particles, to fix the porous structure of the fibre or to reduce the size of the pores of the porous fibre.

Coextrusion is understood to be the simultaneous extrusion of separate materials using a spinning head with multiple openings. Phase inversion is understood to be phase separation, which can be induced by: the change of temperature of the homogeneous solution (thermal phase separation), the evaporation of solvent from a polymer solution that contains a non-volatile non-solvent (evaporation induced phase separation), the penetration of a non-solvent vapor (vapor induced phase separation), or immersion of the homogeneous polymer solution in a non-solvent bath (immersion induced phase separation). The latter is preferred in the production method of the invention. It is preferred to use a two-step phase inversion process as described on page 11 lines 2 - 20 of WO-A-2004/003268. In summary, prior to entering a coagulation bath the exterior of the nascent membrane, here in the shape of a fibre, is in contact with a chosen medium, resulting in a change in composition of the exterior of the layer. This is considered as the first step of the phase separation process. When the membrane enters the coagulation bath the nascent fibre will further phase separate and the structure will be arrested. This is considered as the second step of the phase separation. Using a triple layer spinneret as described in WO-A-93/12868 in the first step a stream of liquid, vapor, gas or vapor/gas mixture can be fed through the third, outermost outlet opening to allow for control of the pore size of the outer porous layer. However, it is considered to be within the scope of the invention to provide a method for the preparation of a membrane as a hollow fibre in which the pore size of the inner wall is controlled. In that case, the stream of liquid, vapor or gas is being fed through the innermost outlet opening of the spinning head instead.

A simple tube-in-orifice spinneret can also be used in the production method of the invention, but offers less flexibility in altering the porosity of the fibre surface as there is no outlet opening left to control the porosity of the outer layer in a first coagulation step. Alternatively to using a triple layer spinneret to control the outer surface porosity the nascent fibre can be spun through a "chimney" or closed box in which the atmosphere is controlled by a continuous flow of a vapor, gas or vapor/gas mixture. When a hot coagulation bath is used the vapor evaporating from the coagulation bath can be used as well to influence the outer layer pore structure.

In the coextrusion step a stream (A) containing particulate material and a stream (B) of polymeric material in a solvent for the polymeric material are being fed separately and simultaneously through two adjacent spinning head outlet openings. Stream (A) and stream (B) will ultimately result in the first and second porous layer of the fibre, respectively. It is preferred that stream (A) is a mixture comprising 0 - 50 wt% of a polymeric matrix, based on the total weight of stream (A). The suitable amount of particles depends on the type of polymer and the concentration of the polymer that is used. In general the amount of particles may vary between 1 and 95% by weight. Thus stream (A) comprises 0% to 50% by weight polymeric material and 1% to 100% by weight of particulate material, the remainder being solvent, the weight being based on the total weight of stream (A). More preferably stream (A) comprises 0.5 wt% to 50 wt% of polymeric material and 1 wt% to 95 wt% of particulate material. It is thus possible to prepare a fibre comprising 100 wt% functionalized particulate matter entrapped within a second porous shell layer in a single preparation step and choosing thin membrane dimensions, preferably having an inner diameter of less than 0.5 mm.

More preferably stream (A) comprises 3 - 50 wt% and most preferably 5 - 20 wt% of polymeric material. Preferably the matrix polymer concentration is less than 12%, more preferably less than 10% by weight. The amount of particles in stream (A) is more preferably between 1 and 97 wt%, typically more than 30 wt%, even more preferably more than 40 wt%, and most preferably 50 - 90 % by weight of stream (A), based on its dry weight. The preferred concentrations depend on the specific polymer(s) and particulate matter that are used and the desired amount of particles in the first porous layer of the fibre that is to be obtained.

Stream (B) comprises 3 to 50 wt%, preferably 5 - 25 wt% of polymeric material. In one embodiment stream (B) is further supplied with 1 to 95 wt% of funtionalized particulate material in accordance with stream (A), to obtain a porous fibre having two adjacent layers of particulate material entrapped in polymeric matrices, wherein the particulate material and/or the polymeric matrices of both layers can be different. For both stream (Aj and stream (B) applies that the polymeric material should be dissolved in a suitable solvent. Therefore, the type of solvent depends on the choice of the polymer. In view of the phase inversion process preferably solvents are used that are well miscible with water. One or more solvents can be used together even in combination with non-solvents. Suitable solvents include, but are not limited to N- methyl-pyrrolidone (NMP), dimethyl acetamide (DMAc), dimethylformamide (DMF), dimethylsulfoxide (DMSO), formamide (FA), tetrahydrofurane (THF), [epsilon]-caprolactam, butyrolactone, in particular 4-butyrolactone, sulfolane, cyclohexanone and tri- ethylphosphate. Preferred solvents are NMP, DMAc, DMF, DMSO, THF, [epsilon]- caprolactam and 4-butyrolactone. As the choice of polymer(s) in stream (A) and stream (B) is taken independently of each other, the solvents can also differ. Mixtures of solvents and non-solvents as well as additive components of any nature may be applied in the coagulation bath to influence the morphological structure of either layer. Additives may be applied to stream (A) and/or stream (B), such as for instance to influence the viscosity, as pore former, as pore connectivity enhancer, to reduce or prevent macro-void formation and/or to introduce hydrophilicity. Possible additives include, but are not limited to polyvinylpyrrolidone (PVP), polyethylene glycol (PEG), polyethyleneoxide (PEO), dextran, glycerol, diethylene glycol, (higher) alcohols such as octanol, carboxylic acids or organic acids, such as oxalic acid, maleic acid, tartaric acid, fumaric acid, salts, such as LiCl and CaCl₂. Other additives have been described earlier herein. It is within the competence of the skilled person to assess and apply suitable (mixtures) of (non-)solvents, additives and process conditions to produce a fibre with desired properties. Additives and/or non-solvent can partly replace the solvent and can vary between 0.01 and 50 wt%.

If a membrane in the shape of a fibre is to be obtained in which the first porous layer with particulate material entrapped therein forms the inner layer, then stream (A) is to be fed through the spinning head on the inside of stream (B), and vice versa for those embodiments in which the second porous layer is the outer layer of the fibre. For those embodiments in which a hollow core and/or a third or even more layers are required, it will be obvious for a skilled person to adapt the spinning head to comprise the required number of outlet openings and to choose the order in which streams need to be submitted to these openings. To achieve a hollow core it is for instance known in the art to apply a stream (C) of bore liquid through the innermost opening, the needle. Where the fibre is required to withhold a third polymeric layer, this layer is formed from a stream (D) for which the same conditions and restraints apply as for stream (B). For those cases in the coextrusion step the stream (D) of polymeric material in a solvent for the polymeric material is coextruded with stream (A) and stream (B), wherein the outlet opening through which stream (A) is being fed is sandwiched between the outlet openings through which streams (B) and (D) are being fed5 after which the three streams are subjected to phase inversion.

As mentioned above, the phase inversion step preferably involves a coagulation medium. Water is the preferred coagulation medium. Other examples of possible coagulation media and non-solvents are methanol, ethanol, propanol, butanol, ethylene glycol, acetone, methyl ethyl ketone. To obtain the desired porosity in the fibres mixtures of non-solvents and solvents in combination with variation in physical process parameters like temperature, production rate, humidity, air gap length, stretching and take up speed are used.

To obtain the desired porosity in the membranes, mixtures of non-solvents and solvents in combination with variation in physical process parameters like temperature, production rate, humidity, air gap length, stretching and take up speed are used. The porosity of the membrane is, for fibres, mainly controlled through the flow of a stream of liquid, vapor or gas through the outlet opening adjacent to the stream ultimately forming the shell layer of the fibre. The choice of the composition of this flow and the contact time prior to entering the coagulation bath determine whether the shell layer becomes dense or porous. When the stream ultimately forming the shell layer is in contact with air of moderate humidity the surface of the outer layer turns out dense. To profit of optimal accessibility of the entrapped sorbent particles a suitable medium is preferably flown along the stream ultimately forming the shell layer during spinning. Preferably the medium is a liquid mixture of solvent and non-solvent for the polymer. Preferably the non-solvent is water.

Alternatively it is possible to apply a gas stream comprising a non-solvent for the polymer. However, if a vapor is used, it is provided that the stream ultimately forming the shell layer of the fibre contains a non-volatile solvent, as a result of which the discharge of solvent into the vapor path is small compared with the diffusion inwards of the vapor of the non-solvent. A mixture of vapors of two non-solvents or a solvent and a non-solvent can also be used to influence fibre formation. In the case of a gas or vapor stream preferably the non-solvent is water vapor. A skilled person can easily determine the desired amount of water vapor in the gas stream to produce a first phase inversion effect. The porosity of the first porous layer can be controlled by varying the concentration of polymeric material, the amount and types of additives, and the size, content and functionality of the particulate material as is explained in more detail on page 10 lines 4 - 26 of WQ-A-2004/003268.

The method thus effectively comprises the step of contacting a sorbent particle as defined herein, and a polymer with a solvent so as to form a mixture, and extruding or casting said mixture followed by solidification to form a membrane. The skilled person is aware of methods to prepare membranes, and in particular mixed matrix membranes. An overview of membrane preparation techniques is for example given by Ladewig and Al-Shaeli (Fundamentals of Membrane Bioreactors - Chapter 2: Fundamentals of Membrane Processes, Springer 2017, pages 13-37). A non-limiting example of a membrane preparation method is phase inversion. Phase inversion can be further specified in different techniques such as precipitation by solvent evaporation, precipitation by controlled evaporation, thermal precipitation, precipitation from the vapor phase, and immersion precipitation. The latter is also known as nonsolvent induced phase inversion. In a preferred embodiment, the solidification is a nonsolvent induced phase inversion, wherein preferably the nonsolvent is water. It will be understood that in that case, after being extruded or cast the mixture is substantially immediately contacted with water, for example by using a water bath. Preferably, extrusion of the mixture is performed using a spinneret. A particularly suitable method that can be applied to produce a membrane of the invention is described in EP1518011. In particular, the conditions as described in [0019]-[0051] thereof are advantageous.

Preferably, the polymer used to prepare the membrane of the invention is at least one polymer selected from the group consisting of polysulfone, polyethersulfone, polyphenylenesulfone, polyarylethersulfone, polyamide, polyetherimide, polyimide, polyethylene-co-vinyl alcohol, polyethylene-co-vinyl acetate, cellulose acetate, cellulose triacetate, polyvinylidene fluoride, polyvinylchloride, polyacrylonitrile, polyurethane, polyether ether ketone, and polyacrylic acid. Most preferably, the method comprises contacting a sorbent particle as defined herein with polyethersulfone and polyvinylpyrrolidone.

In preferred embodiments, the polymer concentration in the mixture from which the membrane is prepared is in a range of from 3 wt% to 50 wt% as compared to the total weight of the polymer and solvent (i.e. excluding the weight of the sorbent particle), preferably in a range of from 5 wt% to 35 wt%, most preferably in a range of from 10 wt% to 20 wt%. Most preferably, the mixture comprises polyethersulfone in a range of from 5 wt% to 15 wt% and polyvinylpyrrolidone in a range of from 1 wt% to 5 wt% as compared to the total weight of the polymer and solvent.

In a preferred embodiment, the solvent is selected from the group consisting of N-methylpyrrolidone (NMP), dimethyl acetamide (DMAc), dimethylformamide (DMF), dimethylsulfoxide (DMSO), formamide (FA), tetrahydrofurane (THF), ε-caprolactam, butyrolactone, sulfolane, cyclohexanone, and triethylphosphate. NMP is the most preferred solvent. It is also preferred that the mixture consists essentially of the sorbent particle, polymer, and solvent as defined herein.

### Devices comprising the membrane

A membrane according to the invention can advantageously be used in renal replacement therapy, such as peritoneal dialysis or hemodialysis. During such use, the membrane is generally present in a cartridge, which can be replaceably inserted in a (hemo)dialysis device. Accordingly, the invention provides a cartridge for use in a dialysis device, comprising a membrane according to the invention. Such a dialysis device can be a hemodialysis device or a device for regeneration of peritoneal dialysate in peritoneal dialysis. Accordingly, the invention provides a dialysis device comprising a membrane according to the invention, or a cartridge according to the invention. Such a dialysis device can be a hemodialysis device or a device for regeneration of peritoneal dialysate in peritoneal dialysis.

Besides the membrane according to the invention, such cartridges and dialysis devices are known in the art. In particular embodiments, the cartridge is a disposable cartridge. In particular embodiments, the cartridge is a regenerable cartridge (for example when the sorbent is a ninhydrin-type sorbent, which can be regenerated under acidic conditions as described in WO2019110557). Cartridges can also be referred to as cassettes. The cartridge is preferably adaptable to be used with various different types of components and to be arranged in a variety of ways. A cartridge may comprise further sorbents or membranes. By removing nucleophilic waste solutes, the cartridge at least partially regenerates the dialysate and/or filtrate used during dialysis. The cartridge preferably includes a body having a fluid inlet and a fluid outlet. The interior of the cartridge is preferably constructed and arranged so that fluid entering the interior from the inlet flows through the membrane and subsequently through the outlet.

A membrane used in a dialysis device is preferably semipermeable. It can be sheet-like and separate two volumes by acting as a wall or as part of a wall. It can be in the form of a fibre bundle that connects two volumes. A very suitable fibre bundle is described in WO2006019293, wherein a bundle of hollow or solid fibres having multiple porous layers concentrically arranged is described.

A dialysis device is a closed, sterile system. It comprises one or two fluid circuits. It usually comprises two circuits: a so-called patient loop, which is a fluid circuit that is arranged for a subject's fluid such as blood or peritoneal dialysate to flow through it, and a so-called regeneration loop, wherein a dialysis fluid such as dialysate and/or filtrate is circulated through a cartridge as described above. The two circuits are separated from each other by a (semi-permeable) membrane, through which waste solutes can diffuse or pass from the subject's fluid into the dialysis fluid. Air, moisture, pathogens, and fluids from the environment around the dialysis device cannot enter into the fluid circuits. The dialysis system only permits fluids (such as ultrafiltrate) and air to exit or enter these fluid circuits under controlled circumstances.

The invention also relates to a cartridge comprising a membrane according to the invention. Preferably, the cartridge is suitable for use in a dialysis device. It is preferred that the cartridge comprises a housing wherein the membrane is placed. Preferably, the cartridge is configured in such a way that during normal use the membrane is in contact with a relevant fluid or a mixture as defined herein in relation to a treatment or a non-therapeutic method for removing an amine- or amide-containing compound, respectively. Typically, the cartridge comprises at least one inlet and at least one outlet for the inflow or outflow, respectively, of fluids.

The invention also relates to a dialysis device comprising a membrane according to the invention or a cartridge as described herein. Preferably, said dialysis device is a portable or wearable artificial kidney device. In a preferred embodiment, the dialysis device comprises at least one inlet and at least one outlet for the inflow or outflow, respectively, of fluids. It is also preferred that the dialysis device comprises means that allow to maintain the temperature of the membrane of the invention at elevated temperatures, preferably in a range of from 20 °C to 90 °C, more preferably in a range of from 35 °C to 80 °C, most preferably in a range of from 36 °C to 75 °C.

### Medical use

In a fourth aspect the invention provides the medical use of a membrane according to the invention. As such, this aspect provides a membrane according to the invention, for use as a medicament, preferably for use in the treatment of a disease or condition associated with accumulation of urea or with improper clearance of urea. Such a membrane is referred to herein as a product for use according to the invention. In this same use is provided a cartridge as described above, and a dialysis device as described above, which each comprise a membrane (for use) according to the invention.

In products for use according to the invention, the products comprise a sorbent as described, which is a substance or composition which achieves the medical effect and which is a chemical entity or compositions of chemical entities. Here the treatment involves the removal of urea from the plasma of patients suffering from conditions as described herein. This effect is achieved by the specific binder for urea which is the sorbent, which is a chemical entity.

In particular embodiments of this aspect, the invention provides a membrane according to the invention, for use as a medicament for use in the treatment of a disease or condition associated with accumulation of ammonia or with improper clearance of ammonia. In further particular embodiments of this aspect, the invention provides a membrane according to the invention, for use as a medicament, wherein the membrane is for binding urea. In further particular embodiments of this aspect, the invention provides a membrane according to the invention, for use as a medicament, wherein the membrane is for binding ammonia.

Treatment of a disease or condition can be the amelioration, suppression, prevention, delay, cure, or prevention of a disease or condition or of symptoms thereof, preferably it shall be the suppression of symptoms of a disease or condition. Urea can accumulate or can be insufficiently cleared in case of kidney failure. Examples of diseases or conditions associated with accumulation of urea or with improper clearance of urea are end stage kidney disease (ESKD); severe acute kidney failure; increased hepatic production of urea for example due to gastro-intestinal haemorrhage; increased protein catabolism, for example due to trauma such as major surgery or extreme starvation with muscle breakdown; increased renal reabsorption of urea, for example due to any cause of reduced renal perfusion, for example congestive cardiac failure, shock, severe diarrhea; iatrogenic conditions due to urea infusion for its diuretic action, due to drug therapy leading to an increased urea production such as treatment with tetracyclines or corticosteroid; chronic kidney failure; and urinary outflow obstruction.

Products for use according to the invention are suitable for use in a method of treatment. Such a method of treatment can be a method comprising the step of contacting a fluid from a subject with a membrane according to the invention, preferably a subject in need thereof, preferably contacting with effective amount of product for use according to the invention.

With respect to dialysis therapy, the present invention can be used in a variety of different dialysis therapies to treat kidney failure. Dialysis therapy as the term or like terms are used throughout the text is meant to include and encompass any and all forms of therapies to remove waste, toxins and excess water from the subject suffering from a disease or condition. The hemo therapies, such as hemodialysis, hemofiltration and hemodiafiltration, include both intermittent therapies and continuous therapies used for continuous renal replacement therapy (CRRT). The continuous therapies include, for example, slow continuous ultrafiltration (SCUF), continuous venovenous hemofiltration (CVVH), continuous venovenous hemodialysis (CVVHD), continuous venovenous hemodiafiltration (CVVHDF), continuous arteriovenous hemofiltration (CAVH), continuous arteriovenous hemodialysis (CAVHD), continuous arteriovenous hemodiafiltration (CAVHDF), continuous ultrafiltration periodic intermittent hemodialysis or the like. The present invention can also be used during peritoneal dialysis including, for example, continuous ambulatory peritoneal dialysis, automated peritoneal dialysis, continuous flow peritoneal dialysis and the like. Further, although the present invention, in an embodiment, can be utilized in methods providing a dialysis therapy for subjects having acute or chronic kidney failure or disease, it should be appreciated that the present invention can also be used for acute dialysis needs, for example, in an emergency room setting. However, it should be appreciated that the compositions of the present invention can be effectively utilized with a variety of different applications, physiologic and non-physiologic, in addition to dialysis.

In particular, the membrane according to the invention is for use in the treatment and/or prevention of a disease selected from the group consisting of uraemia, and azotemia, in a subject. In a preferred embodiment, the disease is uraemia. Uraemia is the condition of having undesired high levels of urea in the blood. The condition can be either chronic or acute. It will be understood that during treatment and/or prevention, the membrane of the invention may be contacted with one or more relevant fluids, such as blood of the subject, or the spent fluid resulting from subjecting the subject to any one of hemodialysis, hemofiltration, or hemodiafiltration or peritoneal dialysis. Hemodialysis, hemofiltration, and hemodiafiltration and peritoneal dialysis are commonly used methods to remove solutes from the blood of patients. In the setup of hemodialysis, blood is flown on one side of a dialysis membrane, while dialysate flows on the other side of the membrane. In hemodialysis, solutes flow through the membrane to the dialysate, mainly due to a difference in concentration (i.e. diffusion). In hemofiltration, dialysate is not used. Instead, a positive hydrostatic pressure drives water and solutes across the filter membrane from the blood compartment to the filtrate compartment, from which it is drained. Solutes and water move over across the membrane, and are removed from the blood, due to convection caused by the difference in hydrostatic pressure. A replacement fluid is added to the blood (before and/or after the blood has been in contact with the dialysis membrane), to replace make up for the water that is transported over the membrane. Hemodiafiltration is the combination of hemodialysis and hemofiltration. Thus, blood is flown on one side of a dialysis membrane, while dialysate flows on the other side of the membrane, and a replacement fluid is added to the blood (before and/or after the blood has been in contact with the dialysis membrane), and transport of solutes from the blood to the dialysate is based on both diffusion and convection. In a typical hemodialysis, hemofiltration, or hemodiafiltration therapy, the blood is returned to the patient after it has been in contact with a dialysis membrane. The spent fluid that has been in contact with the membrane of the invention may be (re)used as for example dialysate or replacement fluid, as the membrane removes amine-containing compounds, in particular urea, from said spent fluid. This is advantageous, especially in miniature dialysis systems such as portable and wearable artificial kidney devices, inter alia because a lower amount of fluid is required to conduct the treatment. The spent fluid may be recirculated directly during treatment, or alternatively stored for later use. In case of hemodialysis, this spent fluid is spent dialysate. In case of hemofiltration, this spent fluid is the water containing the solutes pushed over the membrane, that is in contact with the blood of the subject, due to convection. In case of hemodiafiltration, the spent fluid is one or more of spent dialysate, and the water containing the solutes pushed over the membrane, that is in contact with the blood of the subject, due to convection. In a preferred embodiment, the membrane is for use in the treatment and/or prevention, preferably the treatment, of a disease selected from the group consisting of uraemia, and azotemia, in a subject, wherein the subject is subjected to hemodialysis, hemofiltration, or hemodiafiltration or peritoneal dialysis, and wherein the membrane is in contact with a spent fluid as defined herein, and preferably the membrane is not in direct contact with blood of the subject. In a preferred embodiment, during treatment the membrane is maintained at elevated temperatures, preferably in a range of from 20 °C to 90 °C, more preferably in a range of from 35°C to 80 °C, most preferably in a range of from 36 °C to 75 °C. In a preferred embodiment, the subject is a human. The subject may be of any gender, and similarly, the treatment is not restricted to subjects of a specific age or any other characteristic whatsoever. Preferably, the treatment is selected from the group consisting of hemodialysis, hemofiltration, and hemodiafiltration and peritoneal dialysis. In any of these treatments, the duration of treatment is preferably in a range of from 1 to 36 hours, more preferably in a range of from 1 to 24 hours. Most preferably, the duration of treatment is 4-8 hours when the treatment is hemodialysis. The disclosure also relates to a method of treating and/or preventing a disease selected from the group consisting of uraemia, and azotemia, preferably uraemia, in a subject as defined herein, said method comprising the step of contacting the blood of said subject, and/or contacting spent fluid resulting from subjecting the subject to any one of hemodialysis, hemofiltration, hemodiafiltration or peritoneal dialysis; with a membrane according to the invention. The treatment and/or prevention is preferably as disclosed herein above.

### Method of use

The membranes according to the invention are surprisingly effective at binding nucleophilic solutes, preferably nucleophilic waste solutes. In a fifth aspect, the invention provides a method for removing nucleophilic waste solutes from a fluid, comprising the steps of:
i) providing a fluid comprising nucleophilic waste solutes, and
iia) contacting said fluid with a membrane according to the invention, or with a cartridge according to the invention, or alternately
iib) contacting said fluid with a dialysis fluid through a membrane, wherein the dialysis fluid is in contact with a membranes according to the invention, or with a cartridge according to the invention, and
iii) optionally, recovering the fluid.

Such a method is referred to hereinafter as a binding method according to the invention. The method can be a continuous process, wherein provision of a fluid comprising nucleophilic waste solutes is through provision of a continuous flow of fluid. In such a case, preferably step iii) is not optional, and is also continuously performed. A binding method according to the invention always comprises step i), a step ii) (one of either step iia) or step iib)), and optionally step iii). The membrane in step iib is preferably not the membrane according to the invention, or is a membrane according to the invention that is present further to the membrane according to the invention that is mentioned in step iib as such.

Nucleophilic waste solutes are dissolved substances that are nucleophilic, the removal of which is desired. For example, in human blood, urea is a waste solute. In unpurified water intended as drinking water, most organic nucleophiles are waste solutes. Examples of nucleophilic waste solutes are ammonia, urea, creatinine, and small molecule organic amines, thiols, or alcohols. The chemical binding properties make the membrane according to the invention well suited for a variety of different applications subject to physiological and/or non-physiological conditions. In an embodiment, the membrane according to the invention can be used to remove metabolic waste, such as urea, creatinine, uric acid and/or others like uremic toxins, biological matter, proteinaceous matter, and/or the like from blood, peritoneal dialysate, and/or solutions used to dialyze and/or filter blood, such as dialysate and/or filtrate. Due to its relevance as described elsewhere herein, highly preferred nucleophilic waste solutes are urea and ammonia. In preferred embodiments, the nucleophilic waste solute is ammonia. In other preferred embodiments, the nucleophilic waste solute is urea.

In step i) a fluid comprising a nucleophilic waste solute is provided. This can be waste water which is to be purified, it can be waste solvent which is to be purified, but it can also be a (body) fluid from a subject, such as blood or peritoneal dialysate. When the fluid of step i) is a fluid from a subject, it is preferably blood or peritoneal dialysate, most preferably blood, and preferably a fluid that has been previously obtained from a subject.

In step ii), two options exist. In one option, step iia), the fluid itself is directly contacted with the membrane according to the invention, the composition according to the invention, or the membrane or cartridge according to the invention. Step iia) is very suitable for purification of solvents, or for fluids that are not intended for consumption or for medical purposes after removal of the waste solutes. Step iib) separates the binding membrane according to the invention from fluid provided in step i) by using dialysis fluid and/or filtrate. Step iib) is particularly suited for the removal of nucleophilic waste solutes from pharmaceutical solutions or from fluids obtained from a subject, such as bodily fluids of a subject. Contacting preferably lasts 24 hours, 12 hours, 6 hours, 4 hours, 3 hours, 2 hours, 60 minutes, 50 minutes, 40 minutes, 30 minutes, 20 minutes, 15 minutes, 10 minutes, 9, 8, 7, 6, 5, 4, 3, 2, or 1 minutes, or less. Contacting can also be in continuous flow past the sorbent, in which case the total amount of removed waste solute is more relevant.

Further membranes for use in separating fluids in step iib) are preferably semipermeable membranes. These are known in the art, and can for example be the semipermeable membrane present in a conventional (hemo)dialysis device. Membranes according to the invention as described above can also be used. Dialysis fluids are known in the art and can range from ultrapure water to physiological buffers. Non-limiting examples of dialysis fluids are media comprising known amounts of for example Na, K, Ca, Mg, Cl, acetate, HCO₃, and glucose, such as those available from MDN Neubrandenburg GmbH (Neubrandenburg, Germany), or from Baxter (Deerfield, Illinois, USA), or from Dirinco B.V. (Oss, the Netherlands).

In step iii), which is optional, the fluid is recovered. The membrane according to the invention is porous, or macroporous, and often swellable in aqueous media, such that fluids can flow through it and permeate it. Recovery of a fluid that has been contacted with a sorbent is readily achieved by filtration, centrifugation, or removal of the cartridge containing the sorbent. Recovery of a fluid allows its further processing, or its return to a subject. In preferred embodiments within this aspect, the fluid is recovered.

Preferably, when a fluid is recovered in step iii), relevant physiological parameters are subsequently analyzed and adjusted when appropriate. Examples are ion concentrations, osmolality, pH, particularly Na concentration, Ca concentration, and Mg concentration. Accordingly, a preferred step iii) is the step of recovering the fluid, after which at least one of fluid pH, fluid sodium concentration, fluid magnesium concentration, and fluid calcium concentration is determined and optionally adjusted to a reference value. Preferred reference values are corresponding physiological values for the fluid type. The adjustment can be done in any suitable way known in the art. The adjustment is preferably performed when a deviation from the reference value is detected.

In preferred embodiments of the binding method, at least 1.40, 1.41, 1.42, 1.43, 1.44, 1.45, 1.46, 1.47, 1.48, 1.49, 1.50, 1.51, 1.52, 1.53, 1.54, 1.55, 1.56, 1.57, 1.58, 1.59, 1.60, 1.61, 1.62, 1.63, 1.64, 1.65, 1.67, 1.68, 1.69, 1.70, 1.71, 1.72, 1.73, 1.74, 1.75, 1.76, 1.77, 1.78, 1.79, 1.80, 1.85, 1.90, 1.95, 2.00, 2.05, 2.10, 2.15, 2.20, 2.25, 2.30, 2.35, 2.40, 2.45, 2.50, 2/60, 2.70, 2.80, 2.90, 3.00, or 3.10 mmol of nucleophilic waste solute per gram of sorbent is removed; preferably at least 1.55, 1.56, 1.57, 1.58, 1.59, 1.60, more preferably at least 2.20, even more preferably at least 2.50, most preferably at least 2.55 mmol of nucleophilic waste solute per gram of sorbent is removed. This removal preferably entailed removal of at least 10%, 20%, 30%, 40%, 50%, 60%, 70%, 80%, 85%, 90%, 91%, 92%, 93%, 94%, 95%, or more of a particular nucleophilic waste solute's initial concentration from a fluid as provided in step i), more preferably removal of at least 50% or more.

A membrane of the invention can also be used for removing an amine- or amide-containing compound from a mixture. Preferably, that compound is urea. It is also preferred that the mixture is as defined herein for the non-therapeutic method for removing an amine- or amide-containing compound. It will be understood that the use is preferably a non-therapeutic use.

The invention also relates to a non-therapeutic method for removing an amine- or amide-containing compound from a mixture, wherein said method comprises contacting said mixture with a membrane according to the invention. Preferably, the compound is urea. In a preferred embodiment, the mixture is an aqueous solution, for example a patient sample. Possible applications include the removal of amine-containing compounds from patient samples such as blood or urine or dialysate such as peritoneal dialysate, for example to prepare said sample for further analysis. In other applications, the aqueous solution may for example comprise high amounts of urea and biomolecules such as proteins that denature under these conditions. In a preferred embodiment, in the non-therapeutic methods the membrane is maintained at elevated temperatures, preferably in a range of from 20 °C to 90 °C, more preferably in a range of from 37 °C to 80 °C, most preferably in a range of from 60 °C to 75 °C.

### General Definitions

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one". The word "about" or "approximately" when used in association with a numerical value (e.g. about 10) preferably means that the value may be the given value more or less 5% of the value. As used herein, "subject" means any animal, preferably a mammal, most preferably a human. In preferred embodiments a subject is non-human.

In the context of this invention, a decrease or increase of a parameter to be assessed means a change of at least 5% of the value corresponding to that parameter. More preferably, a decrease or increase of the value means a change of at least 10%, even more preferably at least 20%, at least 30%, at least 40%, at least 50%, at least 70%, at least 90%, or 100%. In this latter case, it can be the case that there is no longer a detectable value associated with the parameter.

The use of a substance as a medicament as described in this document can also be interpreted as the use of said substance in the manufacture of a medicament. Similarly, whenever a substance is used for treatment or as a medicament, it can also be used for the manufacture of a medicament for treatment. Products for use are suitable for use in methods of treatment.

Throughout this document, when percentages are used for expressing amounts of monomers and comonomers in a mixture, mole percentages are intended, unless stated otherwise or explicitly plain from context.

Throughout this application, (hemo)dialysis refers to both hemodialysis and dialysis. In gerenal, a dialysis device can refer to any type of dialysis device as described herein.

The present invention has been described above with reference to a number of exemplary embodiments. Modifications and alternative implementations of some parts or elements are possible, and are included in the scope of protection as defined in the appended claims.

### Description of drawings

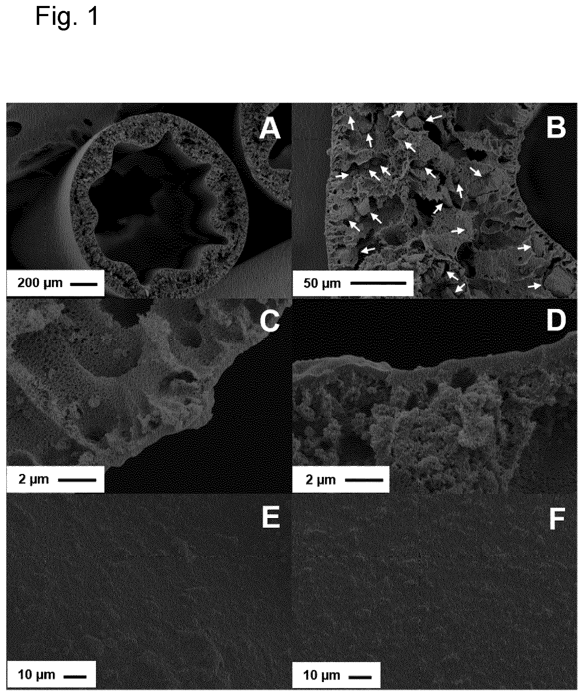

Fig. 1 - scanning electron microscopy images of the mixed matrix membrane, prepared as described in Example 2. Fig. 1A) cross-section image of the MMM corrugated lumen morphology of the membrane. Fig. 1B) magnified image of the wall of the MMM displaying a finger-like macrovoids structure. The sorbent particles are well dispersed, without aggregation and they are well surrounded by the polymer solution (white arrows). Fig. 1C and 1D show, respectively, the lumen (inner layer) and the outer layer of the MMM which present very thin dense layers with no visible pores at the lumen surface (Fig. 1E) or at the outer surface (Fig. 1F). The outer dense layer (Fig. 1D) is slightly thicker (0.5 µm) compared to the inner dense layer (0.2 µm).
Fig. 2 - water permeability of the MMM, prepared as described in Example 2, at varying pressure. Data expressed as mean ± SE (n = 6). Linear approximation yielded a water permeability equal to 238 ± 9 L/(m²·h·Bar).
Fig. 3 - kinetics of urea binding measured at 37 °C, 50 °C, and 70 °C using ninhydrin-type sorbent particles in suspension (containing about 2.5 mmol ninhydrin per g of sorbent), having an average diameter ± SD of 483 ± 282 µm (n = 30).
Fig. 4 - urea binding results taken over time on ninhydrin-type sorbent particles in suspension (containing about 2.5 mmol/g ninhydrin) before (diameter ± standard deviation of 483 ± 282 µm) and after (diameter < 63 µm) grinding and sieving (n = 3).
Fig. 5 - urea binding results taken over time on ninhydrin-type sorbent (diameter < 63 µm) in suspension, and on the MMM comprising such sorbent particles (average ± standard deviation).
Fig. 6 - urea isotherm binding on the sorbent-comprising MMM, prepared as described in Example 2, and on a control hollow fibre (HF, PES/PVP), prepared as described in Example 2.2, without sorbent particles (n = 3).
Fig. 7 - dynamic urea binding results using the MMM comprising sorbent particles, prepared as described in Example 2. In this experiment, urea solution is continuously recirculated through the membrane for 4 hours (n = 5). Urea binding at 4 hours (indicated with an asterisk) has been normalized with the amount of urea eluted from the MMM.
Fig. 8 - kinetics of urea binding using the MMM comprising PGA-type sorbent particles, prepared in the form of a hollow fiber as described in Example 2. Here, urea solution is continuously recirculated through the MMM (n = 2) or continuously stirred with ground sorbent particles (n = 3). PGA-type sorbent in the membrane shows faster urea binding behavior than free PGA-type sorbent that was ground to obtain small particles.

### Examples

### Example 1 - Provision of sorbents

### 1.1 Provision of ninhydrin-type sorbent

This type of sorbent is known in the art and can be prepared as for example described in EP121275A1, US4897200A, or WO2019110557.

### 1.2 Provision of PGA-type sorbent

This type of sorbent is known in the art and can be prepared as for example described in US3933753A or WO2004078797A1. Alternately, it can be produced as described below.

### 1.2.1 Provision of a precursor monomer

In a 3-neck round bottom flask *p*-(ethynylphenyl)ethanone (10.0 g, 69.4 mmol) was suspended in EtOH (350 mL) and Lindlar's catalyst (300 mg, 3 w%) was added. Air was replaced by H₂ and the suspension was stirred at RT for 2-16 hours. To monitor the conversion (and thus preventing over-reduction of VPE into the alkane), samples were frequently taken from the reaction mixture and, 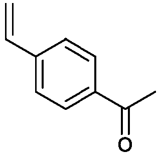 after evaporation of EtOH under reduced pressure, the conversion was determined by ¹H-NMR (CDCl₃). After the conversion was >90%, the H₂-filled balloon was removed and the reaction mixture was concentrated under reduced pressure. The crude product was re-dissolved in CH₂Cl₂ and purified by filtration over Hyflo. The filtrate was concentrated under reduced pressure, giving crude pVPE (p-(vinylphenyl)ethanone) as a yellow liquid in a 99% yield (10.1 g, 69.0 mmol). Melting point 29 °C, melt enthalpy 90.6 J/g. ¹H-NMR (CDCl₃, 600 MHz) δ 7.92 (d, *J* = 8.3 Hz, 2H), 7.48 (d, *J =* 8.2 Hz, 2H), 6.75 (dd, J = 17.6 Hz, 10.9 Hz, 1H), 5.87 (d, *J* = 17.6 Hz, 1H), 5.39 (d, *J* = 10.9 Hz, 1H), 2.59 (s, 3H).

### 1.2.2 Polymerisation of precursor monomer

A two-phase suspension polymerization was used. In brief, the aqueous phase was prepared by addition of NaCl (11 mg), polymethacrylic acid sodium salt solution (452 mg of a 10% gel in water) and CaHPO₄ (84 mg) to water (15 mL). The organic phase was composed of VPE (2.1 g, 14.4 mmol, 2 mL), porogen (2.9 mL, heptane/toluene), 80% technical grade divinylbenzene (3-6 mol%) and a 50% benzoylperoxide blend with dicyclohexyl phthalate (174 mg, 0.36 mmol, 2.5 mol%). After mixing and polymerization (heated at 73 °C in an oil bath for 16 hours under mechanical stirring), the resulting suspension was allowed to cool to RT and poured over a filter (cut-off 200 µm, Veco B.V.). The residue was washed with acetone and water, and finally dried over P₂O₅ under vacuum, resulting in pVPE (1.1-1.9 grams, yield 52-90%).

### 1.2.3 Preparation of PGA-type sorbent based on poly-VPE

The obtained crude pVPE mixtures were then further converted into PGA-type sorbents. The acetyl aromatic groups in pVPE beads were halogenated and subsequently converted into PGAH-groups by a Kornblum oxidation in a one-pot procedure. In a glass reactor equipped with a teflon blade stirrer, pVPE beads (60.0 g) were swollen in DMSO (600 mL, 8.45 mol) for 30 minutes under continuous stirring, after which an aqueous solution of 48% HBr (175 mL, 1.55 mol) was slowly added. One of the outlets of the reactor was capped with a septum containing a needle allowing escape of the formed Me₂S. The suspension was stirred at 80 °C for 8 hours, after which the reaction mixture was filtered (cut-off 200 µm, Veco B.V.). The residue was washed with water until the pH of the filtrate was > 5. The residue was dried over P₂O₅ under vacuum, resulting in PGA-type sorbent (55.2 grams).

### Example 2 - Preparation of sorbent-comprising membranes

### 2.1 General method for sorbent-comprising membrane preparation

A desired amount of polymers is weighed and thoroughly dissolved in ultrapure NMP. After stirring for three days, dry sorbent particles with a longest diameter of 120 µm are added, after which the suspension is agitated on a roller bank for four hours. The resulting suspension is then cast on water to form a sheet-like membrane, or extruded through a spinneret to form fibres.

### 2.2 Preparation of a PES/PVP membrane comprising ninhydrin-type sorbent

Prior to membrane preparation, particles of ninhydrin-type sorbent or PGA type sorbent (e.g. about 2.5 mmol of ninhydrin per g of particles) having an average diameter ± standard deviation of 483 ± 282 µm were ground using a mortar and pestle. Afterwards, the ground sorbent particles were sieved through a 63 µm sieve. A hollow-fibre (HF) Mixed Matrix Membrane (MMM) was prepared with sorbent particles embedded in a PES/PVP polymer matrix. The HF MMM was prepared via a dry-wet spinning technique. The polymer dope solution was prepared by dissolving Ultrason E6020 PES (BASF, Ludwigshafen, Germany) and PVP K90 (molecular weight ≈ 360 kDa, Sigma-Aldrich Chemie GmbH, Munchen, Germany) in ultrapure N-methylpyrrolidone (NMP) (Acros Organics, Geel, Belgium). The particles were added to the dope solution to have a final weight of particles equal to 55% of the dried weight of the membrane. The PES/PVP/ sorbent polymer solution was stirred for two days at 60 °C to ensure proper dispersion of the particles in the polymer solution. Afterwards it was transferred in stainless-steel syringes and left to degas for 24 hours. The concentrations of PES, PVP and sorbent and the spinning parameters used in the study are specified in Table 1. After degassing, the syringe was connected to a high-pressure syringe pump and to a spinneret for preparing the HF (specifications in Table 1). Ultrapure water was used as bore forming solution. The air-gap between the spinneret and the coagulation bath was adjusted to 5.5 cm. The HF was left to free-fall in the water coagulation bath. The fabricated membrane was washed with demineralized-water and stored in demineralized-water for further use.

**Table 1 - Spinning parameters for the Mixed Matrix Membrane**

| | |
|---|---|
| Dope composition (PES/PVP/Particles/NMP) | 6.6/3.1/11.9/78.4 wt.% |
| Dope pumping speed | 1 mL/min |
| Spinneret - Thickness dope orifice | 0.6 mm |
| Bore liquid | Ultra-pure water |
| Bore liquid pumping speed | 1 mL/min |
| Spinneret - Diameter bore needle | 1.35 mm |
| Air gap | 5.5 cm |
| Coagulation bath composition | Ultra-pure water |
| fibres collection | Free falling |

### Example 3 - Characterization of sorbent-comprising membranes

### 3.1 Scanning Electron Microscopy (SEM)

The morphology of the HF MMM (prepared as described in Example 2.2) was analyzed by SEM (JEOL JSM-IT 100, Tokyo, Japan). Samples of the membrane were dried in air and fractured in liquid nitrogen for the imaging of the cross-sections. Prior to SEM imaging, the samples were gold sputtered (Cressington 108 auto sputter, (Cressington Scientific Instruments, Watford, UK).

A cross-section image of the MMM (Fig. 1A) shows corrugated lumen morphology of the membrane. Although the corrugated morphology might indicate a certain instability of the membrane forming system, the grooves are axially well-aligned with the flow direction. Such corrugation generally does not disturb mass transfer, flow rate and transmembrane pressure along the fibre. In addition, the presence of grooves in the lumen side of the fibre increases the active surface area, with advantages regarding filtration and diffusion performance of the membrane. Also, the thick wall of the membrane allows for more particles to be embedded in the polymer matrix per unit of length, thus enhancing capturing properties of the MMM.

From the magnification of the wall of the MMM (Fig. 1B), a finger-like macrovoids structure, typical of SEM membranes, is visible at the lumen and outer sides of the membrane, while it vanishes along the center of the wall cross-section, where more particles are hosted in the polymer matrix. The sorbent particles are well dispersed, without aggregation and they are well surrounded by the polymer solution (white arrows in Fig. 1B).

Both the lumen and the outer layer of the MMM (Fig. 1C and 1D, respectively) present very thin dense layers with no visible pores at the lumen surface (Fig. 1E) or at the outer surface (Fig. 1F). However, the outer dense layer (Fig. 1D) is slightly thicker (0.5 µm) compared to the inner dense layer (0.2 µm). For this reason, it is believed that the selective layer of the membrane, determining the molecular-weight cut-off and the filtration properties of the membrane, is the outer dense layer.

### 3.2 Water transport experiment

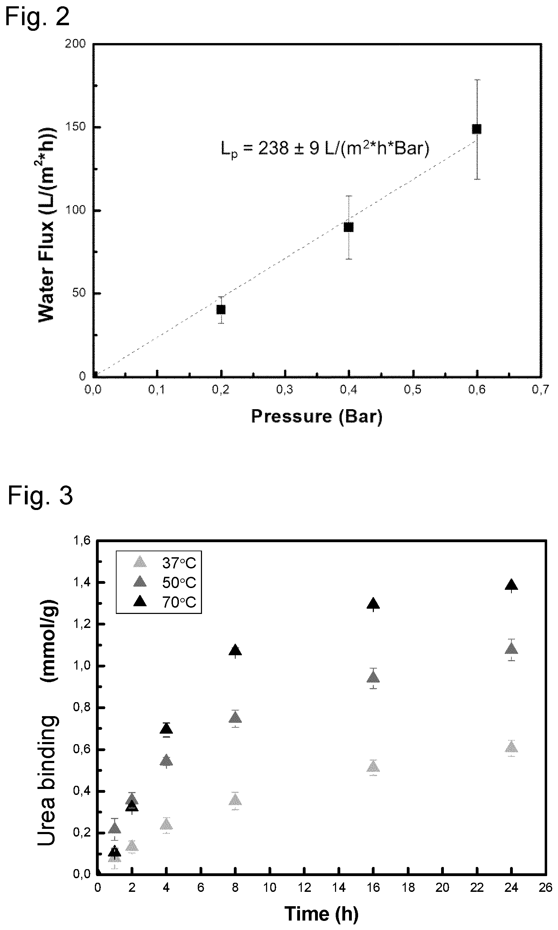

The MMM was also characterized in terms of water transport properties. Membrane modules composed of 3 HF with a total surface area of 13.9 cm² were used. A 2-compontent epoxy glue (Griffon Combi Snel-Rapide, Bison International, Goes, The Netherlands) was used for the preparation of the modules. Before water transport experiments, the HF modules (n = 6) were pre-wetted with EtOH for 30 minutes at a trans-membrane pressure (TMP) of 0.2 Bar and precompacted with ultra-pure water at a TMP of 0.6 Bar for 30 minutes. Afterwards, the amount of permeated water was measured over time at TMP of 0.2, 0.4 and 0.6 Bar. The resulting water permeability was calculated as the slope of the linear fit of the flux (L/(m²·h)) versus the TMP (Bar). The MMM is an ultrafiltration membrane with water permeability equal to 238 ± 9 L/(m²·h·Bar) (Fig. 2). The ultrafiltration coefficient (K_{uf}) of the MMM is 309 mL/(h·mmHg·m²). The water flux trough the membrane increases linearly over pressure, without compaction or breakage of the HF MMM. Overall, these results suggest that the MMM has excellent morphology characteristics and filtration properties for use in ultrafiltration.

### Example 4 - Capturing urea using sorbent-comprising membranes

### 4.1 Static capture of urea

### 4.1.1 Effect of temperature on urea binding kinetics using ninhydrin-type sorbent

A urea kinetic binding experiment was performed at 37 °C, 50 °C and 70 °C to study the effect of temperature on the binding reaction of urea with ninhydrin groups (about 2.5 mmol/g of sorbent) in ninhydrin particles prepared from crosslinked polystyrene (PS-Nin). The free particles used for this experiment have an average diameter ± standard deviation of 483 ± 282 µm (N = 30). The sorbent beads (15 mg) were incubated with a urea solution (1.5 mL, 30 mM) in PBS. The samples (n = 3 for each time point) were placed in an oven on a rotating device at 37, 50 or 70 °C. After 1, 2, 4, 8, 16 and 24 hours, the urea concentration in the supernatants was analyzed with an AU 5800 routine chemistry analyzer (Beckman Coulter, Brea, CA) using a coupled enzyme reaction, which results in a colorimetric (570 nm) product proportional to the urea concentration. Via the mass balance, the amount of urea bound was calculated from the depleted amount of urea in the solution. The results in Fig. 3 are shown as average ± standard deviation. At higher temperatures the urea binding kinetic is faster. Indeed, at 70 °C the particles bind 1.4 ± 0.0 mmol/g of urea over a period of 24 hours, which is much higher compared to the binding at 50 °C and 37 °C. Saturation of the ninhydrin moieties with urea is not reached at 24 hours even at 70 °C. Here, the maximum achievable saturation was established to be 1.6-1.7 mmol/g for the particles. Given the faster binding kinetic at 70 °C, later urea binding experiments were performed at 70 °C.

### 4.1.2 Particle size effect on Urea binding kinetics

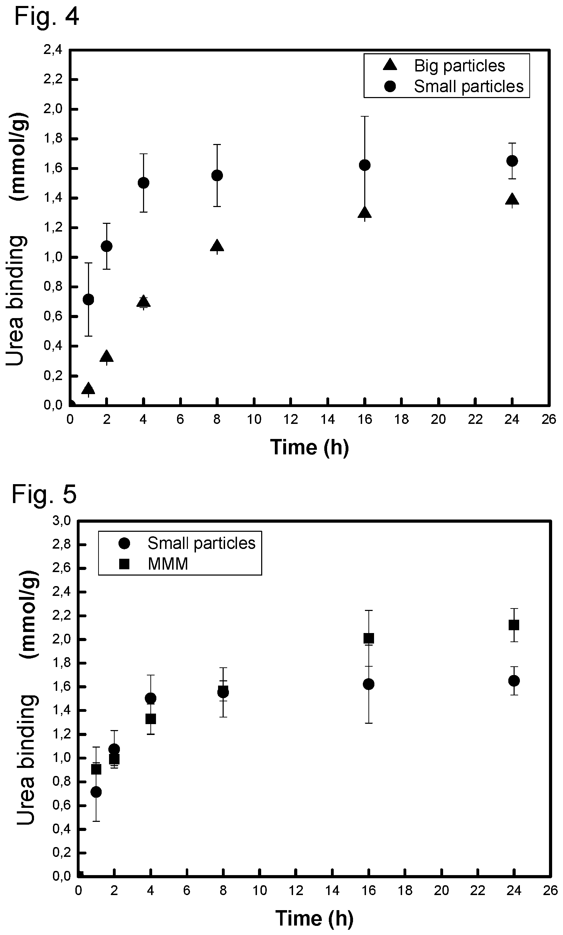

To study the effect of particle size on urea binding, a urea kinetic binding experiment was performed at 70 °C on PS-Nin particles (about 2.5 mmol/g ninhydrin) with average diameter of 483 ± 282 µm and on the same particles after grinding and sieving (example 2.2) having a diameter of less than 63 µm. The bigger sorbent beads (15 mg) were incubated with urea solution (1.5 mL, 30 mM) in PBS (pH 7.4); the grinded and sieved particles were incubated in urea solution (1.5 mL, 30 mM) in dialysate (pH 7.4). The samples (n = 3 for each time point) were shaken at 70 °C and after 1, 2, 4, 8, 16 and 24 hours the supernatants were collected via filtration. Urea concentration was determined by the enzymatic assay Urea FS* (Diasys, Holzheim, Germany) or by the AU 5800 routine chemistry analyzer (Beckman Coulter, Brea, CA). Both methods are based on a coupled enzyme reaction, which results in a colorimetric product proportional to the urea concentration. Via the mass balance, the amount of urea bound was calculated from the depleted amount of urea in the solution. The results in Fig. 4 are shown as average ± standard deviation. Urea binding kinetics are much faster on the smaller particles compared to the bigger particles. At 4 hours urea binding on the smaller particles is over double the binding of urea on the bigger particles. Urea binding kinetics on the small particles are very fast during the first 4 hours and then it slowly decreases. Over a period of 24 hours, binding of urea is equal to 1.7 ± 0.1 mmol/g of urea on the smaller particles and 1.4 ± 0.0 mmol/g on the bigger particles. Despite the higher surface area, maximum binding capacity (2.5 mmol/g) was not reached. Particle size thus has a strong effect on binding kinetics, but has a much smaller effect on binding capacity.

### 4.1.3 Urea binding kinetics for the MMM comprising sorbent particles

To study the effect of the incorporation of the particles in the polymer matrix of MMM, a urea kinetic binding experiment was performed at 70 °C on ground PS-Nin particles (about 2.5 mmol/g ninhydrin) with a diameter of less than 63 µm and on the MMM prepared as described in example 2.2. The sorbent beads (15 mg) and the MMM (27 mg, containing 15 mg of embedded particles) were incubated with urea solution (1.5 mL, 30 mM) in dialysate (pH 7.4) and shaken at 70 °C. After 1, 2, 4, 8, 16 and 24 hours, the supernatants were collected (via filtration for the particles) and the urea concentration in the supernatants was determined using an enzyme assay (Urea FS*, Diasys, Holzheim, Germany). Via the mass balance, the amount of urea bound was calculated from the depleted amount of urea in the solution. Each timepoint was represented by three different samples (n = 3) (Fig. 5). The results in Fig. 5 are shown as average ± standard deviation. Urea binding kinetics are very similar for the particles in suspension and for the particles in the MMM over a period of 8 hours. Interestingly, at 8 hours urea binding the particles in suspension reach a plateau, while the particles embedded in the MMM keep binding. At 24 hours, urea binding to the particles in suspension is equal to 1.7 ± 0.1 mmol/g, while on the particles embedded in the MMM it is 2.1 ± 0.1 mmol/g. After a longer period of time urea binding to the particles in the MMM can reach saturation (maximum binding capacity is about 2.5 mmol/g). This demonstrates how the polymer matrix does not limit the ability of urea to reach the particles; apparently binding is even enhanced compared to free sorbent particles.

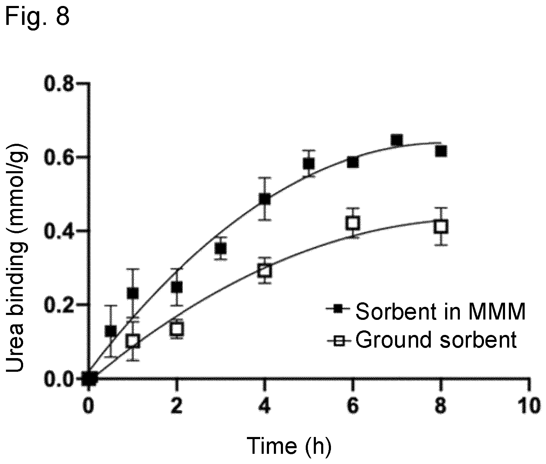

Further improved urea binding was demonstrated using PGA-type sorbent in a hollow fiber MMM. In a comparative experiment, an amount of MMM comprising 88 mg of a PGA-type sorbent was contacted with a PBS buffer comprising 30 mM urea, using a recirculating setup with a flow rate of 5mL/min (total volume 25mL) at a temperature of 70°C. Urea binding was determined at various time points, as shown in Fig. 8 (n=2; yet n=1 for t=6-8h). As comparison, a static batch experiment was performed using 5mg of the same PGA-type sorbent, in a total volume of 1mL of the same urea solution that was continuously stirred at 70°C, and urea binding was determined at various time points (n=3). The results in Fig. 8 demonstrate that the binding kinetics of the PGA-type sorbent in the MMM is faster than the kinetics of ground sorbent under agitation.

### 4.1.4 Urea isotherm binding to the MMM and to a control membrane

Urea binding at various concentrations was measured with the MMM (prepared as described in Example 2.2) and with a PES/PVP control HF. PES/PVP control HF has been prepared via dry-wet spinning technique as described in Acta Biomaterialia 90 (2019) 100-111*.* Briefly, the polymer dope solution was prepared by dissolving Ultrason E6020 PES (15 wt%) (BASF, Ludwigshafen, Germany) and PVP K90 (7 wt%) (molecular weight ≈ 360 kDa, Sigma-Aldrich Chemie GmbH, Munchen, Germany) in ultrapure NMP (78 wt%) (Acros Organics, Geel, Belgium). The polymer solution was mixed on a roller bench for 3 days, then it was transferred into a stainless-steel syringe and left to degas for 24 hours. Afterwards, the syringe was connected to a high-pressure syringe pump and to a designed spinneret. The dope solution pumping speed was set at 0.4 mL/min. Ultrapure water was used as bore forming solution and the bore solution pumping speed was set at 1.2 mL/min. The air-gap between the spinneret and the coagulation bath was adjusted to 10 cm. A collecting wheel (speed 8.3 m/min) was used for the collection of the produced HF. The fabricated membrane was washed with demineralized-water and stored for further use.

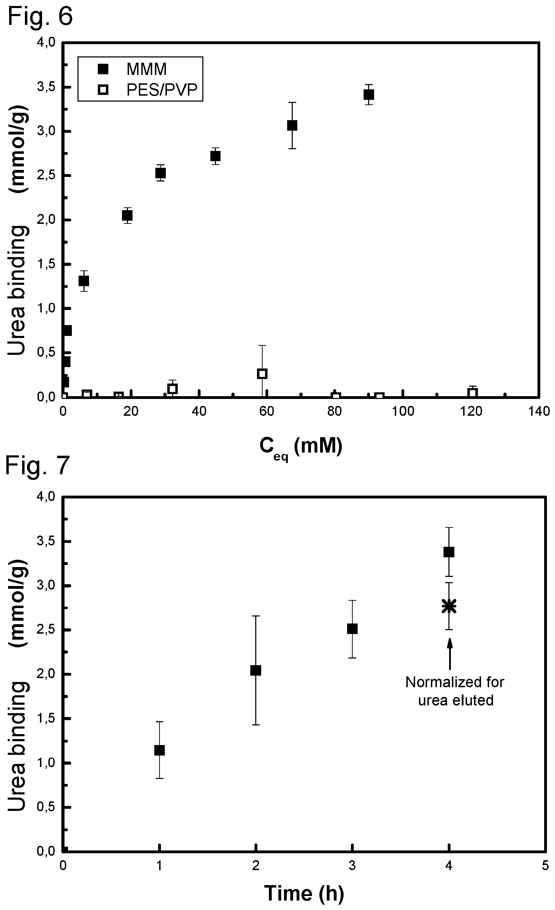

27 mg of the MMM (15 mg of particles in the MMM) and 27 mg of the control HF were incubated with 1.5 mL of urea solution in dialysate (pH 7.4) at different concentrations. The samples were placed in a horizontally shaking water bath at 70 °C. After 24 hours, the supernatants were collected and the urea concentration in the supernatants was determined using an enzyme assay (Urea FS*, Diasys, Holzheim, Germany). Via the mass balance, the amount of urea bound was calculated from the depleted amount of urea in the solution. The results in Fig. 6 are shown as average ± standard deviation (N = 3). The graph presents binding capacity (mmol/g) versus equilibrium urea concentration (mM). The PES/PVP control HF does not bind urea, suggesting that only the sorbent particles inside the MMM are responsible for urea binding.

Interestingly, at an equilibrium concentration of 90.1 mmol/g, urea binding to the MMM is equal to 3.4 ± 0.1 mmol/g, surpassing expected values for 1-on-1 binding to ninhydrin. This higher binding of urea might be explained via multi-layered binding of urea, where urea molecules adsorb via hydrogen bonding (physisorption) on urea covalently bound (chemisorption) to the ninhydrin moieties of the particles.

### 4.1.5 Dynamic binding of urea

Membrane modules composed of 3 HF (prepared as described in Example 2) with a total surface area of 23.3 cm² and with a total amount of particles embedded in the PES/PVP matrix equal to 77 mg were used to study urea binding in dynamic conditions. A 2-compontent epoxy glue (Griffon Combi Snel-Rapide, Bison International, Goes, The Netherlands) was used for the preparation of the modules. Before dynamic urea binding experiments, the HF modules (n = 5) were kept in demi-water. Urea dynamic experiments were performed in filtration mode (TMP = 0.15 Bar) with urea solution 30 mM in dialysate continuously recirculated through the fibres at a flow rate of 20 mL/min using a dedicated setup (Convergence, Enschede, The Netherlands). The binding experiments (n = 5) were performed at 70 °C for 4 hours. To maintain a temperature of the urea solution of 70 °C inside the recirculation system, the feed solution was heated at 70 °C, the tubing was insulated and the HF module was immerged in a water bath heated at 90 °C. Samples of the urea solution were collected every hour for quantification. At the end of the binding experiment, the HF module was removed from the 90 °C water bath and was emptied. 24.5 mL of MilliQ water at room temperature were recirculated through the module at a flow rate of 20 mL/min for 1 hour to collect possibly eluted urea from the MMM. The urea concentration was quantified using an enzymatic assay (Urea FS*, Diasys, Holzheim, Germany).

Binding results are shown in Fig. 7. Over a period of 4 hours, the membrane is able to bind 3.4 ± 0.3 mmol/g and does not appear to reach saturation. When a binding experiment is performed in dynamic mode, the binding kinetic is much faster compared to static conditions. Not only is the kinetic faster, but also the total amount of urea bound to the sorbent particles is higher compared to the static condition. The amount of urea bound per gram of particles in the MMM is higher than the total amount of ninhydrin moieties in the particles (about 2.5 mmol/g). It is believed that 1) all ninhydrin moieties in the particles are saturated and 2) that urea molecules adsorb via hydrogen bonding (physisorption) on urea covalently bound (chemisorption) to the ninhydrin moieties of the particles, thus having multi-layered binding which is possibly enabled by the formed surface saturated with covalently bound urea.

When the MMM modules (n = 2) were rinsed with MilliQ water at the end of the experiment, 0.05 millimoles were detected after 1 hour. Urea binding at 4 hours normalized with the amount of urea eluted from the MMM is indicated with an asterisk in Fig. 7. It was expected that, for a longer rinsing period, all urea physisorbed in the system would have been eluted out. This experiment confirms that in dynamic conditions urea binding to the MMM is a combination of chemisorption and physisorption. Because urea did not bind to control membranes with no sorbent particles, the combined binding is an effect of the membranes according to the invention.

In conclusion, the recirculation and filtration of urea solution through the membrane improves binding kinetic and total binding. Moreover, when maximum chemisorption capacity is reached, adsorption of urea can continue, possibly due to the hydrogen bonding of urea molecules to the newly formed surface of covalently bound urea.

## Claims

1. Membrane comprising embedded particulate material,
wherein the membrane is a porous polymeric membrane,
wherein the particulate material comprises a urea sorbent, wherein the urea sorbent is a sorbent that covalently captures urea, wherein at least 10% of urea binding is covalent capture of urea, and
wherein the particle size of the particulate material is at most 250 µm along the largest diameter.

2. Membrane according to claim 1, wherein the particulate material is present in the membrane in a range of from 5 wt% to 80 wt%, preferably of from 25 wt% to 70 wt%, based on the total dry weight of the membrane and the particulate material.

3. Membrane according to claim 1 or 2, wherein the particle size of the particulate material is at most 150 µm along the largest diameter, preferably at most 85 µm, more preferably at most 70 µm.

4. Membrane according to any one of claims 1-3, wherein the membrane is in the form of a hollow fibre, a full fibre, or a flat sheet; preferably the membrane is a hollow fibre.

5. Membrane according to any one of claims 1-4, wherein the membrane comprises at least one polymer selected from polysulfone, polyethersulfone, polyphenylenesulfone, polyarylethersulfone, polyamide, polyetherimide, polyimide, polyethylene-co-vinyl alcohol, polyethylene-co-vinyl acetate, cellulose acetate, cellulose triacetate, polyvinylidene fluoride, polyvinylchloride, polyacrylonitrile, polyurethane, polyether ether ketone, and/or polyacrylic acid; preferably it comprises polyethersulfone and/or polyvinylpyrrolidone.

6. Membrane according to any one of claims 1-5, wherein the membrane has a water permeability of at least 1 L/(m²·h·Bar).

7. Membrane according to any one of claims 1-6, wherein binding comprises at least 50% covalent capture of urea.

8. Membrane according to claim 1, wherein the urea sorbent is a macromolecular composition comprising a polymeric backbone grafted with moieties that can covalently capture urea, wherein the moieties that can covalently capture urea preferably comprise two or more neighboring carbonyl groups or a hydrate thereof.

9. Membrane according to any one of claims 1-8, wherein the urea sorbent is selected from a ninhydrin-type sorbent, a phenylglyoxaldehyde-type sorbent, and/or a triformylmethyl-type sorbent.

10. Membrane according to any one of claims 1-9,
wherein the particulate material further comprises activated carbon particles, ion exchange particles such as ion exchange resin particles or ion exchange silica particles, silica particles such as unmodified silica particles or alkylated silica particles, zeolite particles, ceramic particles, polymeric particles such as porous polymeric particles or non-porous polymeric particles, and/or molecularly imprinted particles, and/or
wherein the membrane further comprises an additive such as a hydrophilic additive, preferably polyvinylpyrrolidone, chitosan, polyethylene glycol, dextran, glycerol, diethylene glycol, octanol, oxalic acid, maleic acid, tartaric acid, fumaric acid, lithium chloride, and/or calcium chloride.

11. Membrane as defined in any one of claims 1-10 for use as a medicament, preferably for use in the treatment of a disease or condition associated with accumulation of urea.

12. Method for the preparation of a membrane as defined in any one of claims 1-10, comprising the steps of
i. providing urea sorbent particles having a size of at most 250 µm along the largest diameter;
ii. mixing the urea sorbent particles with polymeric material in a solvent for the polymeric material to obtain a mixture;
iii. extruding or casting the mixture to form a membrane; and
iv. optionally solidifying said membrane, preferably by phase inversion.

13. Method for removing nucleophilic waste solutes from a fluid, comprising the steps of:
i) providing a fluid comprising nucleophilic waste solutes, and
iia) contacting said fluid with a membrane as defined in any one of claims 1-10, or alternately
iib) contacting said fluid with a dialysis fluid through a membrane, wherein the dialysis fluid is in contact with a membrane as defined in any one of claims 1-10, and
iii) optionally, recovering the fluid.

14. Cartridge for use in a dialysis device, comprising a membrane as defined in any one of claims 1-10.

15. Dialysis device comprising a membrane as defined in any one of claims 1-10, or a cartridge as defined in claim 14.

## Patentansprüche

1. Membran, die eingebettetes partikuläres Material umfasst,
wobei die Membran eine poröse polymere Membran ist,
wobei das partikuläre Material ein Harnstoffsorbens umfasst, wobei das Harnstoffsorbens ein Sorbens ist, das Harnstoff kovalent einfängt, wobei mindestens 10% der Harnstoffbindung kovalenter Einfang von Harnstoff ist, und
wobei die Teilchengröße des partikulären Materials höchstens 250 µm entlang des größten Durchmessers ist.

2. Membran nach Anspruch 1, wobei das partikuläre Material in der Membran in einem Bereich von 5 Gew.-% bis 80 Gew.-%, bevorzugt von 25 Gew.-% bis 70 Gew.-%, bezogen auf das Gesamttrockengewicht der Membran und des partikulären Materials, vorhanden ist.

3. Membran nach Anspruch 1 oder 2, wobei die Teilchengröße des partikulären Materials höchstens 150 µm entlang des größten Durchmessers, bevorzugt höchstens 85 µm, mehr bevorzugt höchstens 70 µm, ist.

4. Membran nach einem der Ansprüche 1-3, wobei die Membran in der Form einer Hohlfaser, einer Vollfaser, oder eines flachen Blattes ist; bevorzugt ist die Membran eine Hohlfaser.

5. Membran nach einem der Ansprüche 1-4, wobei die Membran mindestens ein Polymer ausgewählt aus Polysulfon, Polyethersulfon, Polyphenylensulfon, Polyarylethersulfon, Polyamid, Polyetherimid, Polyimid, Polyethylen-Co-Vinylalkohol, Polyethylen-Co-Vinylacetat, Celluloseacetat, Cellulosetriacetat, Polyvinylidenfluorid, Polyvinylchlorid, Polyacrylnitril, Polyurethan, Polyetheretherketon und/oder Polyacrylsäure umfasst; bevorzugt umfasst sie Polyethersulfon und/oder Polyvinylpyrrolidon.

6. Membran nach einem der Ansprüche 1-5, wobei die Membran eine Wasserpermeabilität von mindestens 1 L/(m²·h·bar) aufweist.

7. Membran nach einem der Ansprüche 1-6, wobei die Bindung mindestens 50 % kovalenten Einfang von Harnstoff umfasst.

8. Membran nach Anspruch 1, wobei das Harnstoffsorbens eine makromolekulare Zusammensetzung ist, die ein polymeres Backbone umfasst, das mit Einheiten bestückt ist, die Harnstoff kovalent einfangen können, wobei die Einheiten, die Harnstoff kovalent einfangen können bevorzugt zwei oder mehr benachbarte Carbonylgruppen oder ein Hydrat davon umfassen.

9. Membran nach einem der Ansprüche 1-8, wobei das Harnstoffsorbens ausgewählt ist aus einem Ninhydrin-Typ-Sorbens, einem Phenylglyoxaldehyd-Typ-Sorbens und/oder einem Triformylmethyl-Typ-Sorbens.

10. Membran nach einem der Ansprüche 1-9,
wobei das partikuläre Material ferner Aktivkohleteilchen, Ionenaustauschteilchen, wie etwa Ionenaustausch-Harzteilchen oder Ionenaustausch-Silikateilchen, Silikateilchen, wie etwa unmodifizierte Silikateilchen oder alkylierte Silikateilchen, Zeolithteilchen, Keramikteilchen, polymere Teilchen, wie etwa poröse polymere Teilchen oder nicht-poröse polymere Teilchen und/oder molekular geprägte Teilchen umfasst, und/oder
wobei die Membran ferner ein Additiv, wie etwa ein hydrophiles Additiv, bevorzugt Polyvinylpyrrolidon, Chitosan, Polyethylenglykol, Dextran, Glycerin, Diethylenglykol, Octanol, Oxalsäure, Maleinsäure, Weinsäure, Fumarsäure, Lithiumchlorid und/oder Calciumchlorid, umfasst.

11. Membran, wie in einem der Ansprüche 1-10 definiert, zur Verwendung als Medikament, bevorzugt für die Verwendung bei der Behandlung einer Krankheit oder eines Zustands, der mit der Anhäufung von Harnstoff verbunden ist.

12. Verfahren für die Herstellung einer Membran, wie einem der Ansprüche 1-10 definiert, umfassend die Schritte aus
i. Bereitstellen von Harnstoffsorbensteilchen, die eine Größe von höchstens 250 µm entlang des größten Durchmessers aufweisen;
ii. Mischen der Harnstoffsorbensteilchen mit polymerem Material in einem Lösungsmittel für das polymere Material, um eine Mischung zu erhalten;
iii. Extrudieren oder Gießen der Mischung, um eine Membran zu bilden; und
iv. optionales Verfestigen dieser Membran, bevorzugt durch Phaseninversion.

13. Verfahren zur Entfernung gelöster nucleophiler Abfallstoffe aus einer Flüssigkeit, umfassend die Schritte aus:
i) Bereitstellen einer Flüssigkeit, die gelöste nukleophile Abfallstoffe umfasst, und
iia) Kontaktieren der Flüssigkeit mit einer Membran, wie in einem der Ansprüche 1-10 definiert, oder alternativ
iib) Kontaktieren der Flüssigkeit mit einer Dialyseflüssigkeit durch eine Membran, wobei die Dialyseflüssigkeit in Kontakt mit einer Membran, wie in einem der Ansprüche 1-10 definiert, ist, und
iii) optionale Rückgewinnung der Flüssigkeit.

14. Kartusche für die Verwendung in einer Dialysevorrichtung, umfassend eine Membran, wie in einem der Ansprüche 1-10 definiert.

15. Dialysevorrichtung, umfassend eine Membran, wie in einem der Ansprüche 1-10 definiert, oder eine Kartusche, wie in Anspruch 14 definiert.

## Revendications

1. Membrane comprenant une matière particulaire incorporée,
dans laquelle la membrane est une membrane polymère poreuse,
dans laquelle la matière particulaire comprend un sorbant d'urée, dans laquelle le sorbant d'urée est un sorbant qui capture l'urée de manière covalente, dans laquelle au moins 10 % de la liaison à l'urée est une capture covalente d'urée, et
dans laquelle la taille de particule de la matière particulaire est d'au plus 250 µm le long du diamètre le plus grand.

2. Membrane selon la revendication 1, dans laquelle la matière particulaire est présente dans la membrane dans une plage de 5 % en poids à 80 % en poids, de préférence de 25 % en poids à 70 % en poids, sur la base du poids sec total de la membrane et de la matière particulaire.

3. Membrane selon la revendication 1 ou 2, dans laquelle la taille de particule de la matière particulaire est d'au plus 150 µm le long du diamètre le plus grand, de préférence d'au plus 85 µm, de manière plus préférée d'au plus 70 µm.

4. Membrane selon l'une quelconque des revendications 1 à 3, dans laquelle la membrane se présente sous la forme d'une fibre creuse, d'une fibre pleine, ou d'une feuille plate ; la membrane est de préférence une fibre creuse.

5. Membrane selon l'une quelconque des revendications 1 à 4, dans laquelle la membrane comprend au moins un polymère choisi parmi polysulfone, polyéthersulfone, polyphénylènesulfone, polyaryléthersulfone, polyamide, polyétherimide, polyimide, alcool de polyéthylène-co-vinyle, acétate de polyéthylène-co-vinyle, acétate de cellulose, triacétate de cellulose, fluorure de polyvinylidène, chlorure de polyvinyle, polyacrylonitrile, polyuréthane, polyétheréthercétone et/ou un acide polyacrylique ; elle comprend de préférence de la polyéthersulfone et/ou de la polyvinylpyrrolidone.

6. Membrane selon l'une quelconque des revendications 1 à 5, dans laquelle la membrane présente une perméabilité à l'eau d'au moins 1 L/(m².h.bar).

7. Membrane selon l'une quelconque des revendications 1 à 6, dans laquelle la liaison comprend au moins une capture covalente à 50 % d'urée.

8. Membrane selon la revendication 1, dans laquelle le sorbant d'urée est une composition macromoléculaire comprenant un squelette polymère greffé avec des fractions qui peuvent capturer l'urée de manière covalente, dans laquelle les fractions qui peuvent capturer l'urée de manière covalente comprennent de préférence deux groupes carbonyle voisins ou plus ou un hydrate de ceux-ci.

9. Membrane selon l'une quelconque des revendications 1 à 8, dans laquelle le sorbant d'urée est choisi parmi un sorbant de type ninhydrine, un sorbant de type phénylglyoxaldéhyde et/ou un sorbant de type triformylméthyle.

10. Membrane selon l'une quelconque des revendications 1 à 9,
dans laquelle la matière particulaire comprend en outre des particules de charbon actif, des particules échangeuses d'ions telles que des particules de résine échangeuse d'ions ou des particules de silice échangeuse d'ions, des particules de silice telles que des particules de silice non modifiée ou des particules de silice alkylée, des particules de zéolite, des particules de céramique, des particules polymères telles que des particules polymères poreuses ou des particules polymères non poreuses, et/ou des particules à empreinte moléculaire, et/ou
dans laquelle la membrane comprend en outre un additif tel qu'un additif hydrophile, de préférence la polyvinylpyrrolidone, le chitosane, le polyéthylène glycol, le dextrane, le glycérol, le diéthylène glycol, l'octanol, l'acide oxalique, l'acide maléique, l'acide tartrique, l'acide fumarique, le chlorure de lithium et/ou le chlorure de calcium.

11. Membrane telle que définie dans l'une quelconque des revendications 1 à 10 pour utilisation en tant que médicament, de préférence pour le traitement d'une maladie ou d'un état associé(e) à une accumulation d'urée.

12. Procédé pour la préparation d'une membrane telle que définie dans l'une quelconque des revendications 1 à 10, comprenant les étapes consistant à :
i. fournir des particules de sorbant d'urée présentant une taille d'au plus 250 µm le long du plus grand diamètre ;
ii. mélanger les particules de sorbant d'urée avec un matériau polymère dans un solvant pour le matériau polymère afin d'obtenir un mélange ;
iii. extruder ou couler le mélange pour former une membrane ; et
iv. facultativement solidifier ladite membrane, de préférence par inversion de phase.

13. Procédé pour éliminer des solutés de déchets nucléophiles d'un fluide, comprenant les étapes consistant à :
i) fournir un fluide comprenant des solutés de déchets nucléophiles, et
iia) mettre en contact ledit fluide avec une membrane telle que définie dans l'une quelconque des revendications 1 à 10, ou en variante
iib) mettre en contact ledit fluide avec un fluide de dialyse à travers une membrane, dans lequel le fluide de dialyse est en contact avec une membrane telle que définie dans l'une quelconque des revendications 1 à 10, et
iii) facultativement, récupérer le fluide.

14. Cartouche à utiliser dans un dispositif de dialyse, comprenant une membrane telle que définie dans l'une quelconque des revendications 1 à 10.

15. Dispositif de dialyse comprenant une membrane telle que définie dans l'une quelconque des revendications 1 à 10, ou cartouche telle que définie dans la revendication 14.
